# EUROPÄISCHE PATENTANMELDUNG

(11) **EP 3 827 664 A1**
(43) Veröffentlichungstag der Anmeldung: **02.06.2021**
(21) Anmeldenummer: 20205830.1
(22) Anmeldetag: 05.11.2020
(51) Int. Cl.: A01G 25/00, E03B 3/03

(54) **BEWÄSSERUNGSSYSTEM**

(30) Priorität: 29.11.2019 DE 102019218518
(71) Anmelder: Robert Bosch GmbH, 70442 Stuttgart (DE)
(72) Erfinder: Jenkins, Rhys, Cambridgeshire CB63WA (GB)

(57) **Zusammenfassung**

Die Erfindung geht aus von einem Bewässerungssystem, insbesondere von einem Gartenbewässerungssystem, mit zumindest einem Leitungselement (12a; 12e; 12g), insbesondere einem Gartenschlauch und/oder einem Gartenschlauchadapter, das dazu vorgesehen ist, zumindest ein Fluid (14a; 14e; 14g), insbesondere Regenwasser, zu leiten, und mit zumindest einer mit dem Leitungselement (12a; 12e; 12g) fluidtechnisch koppelbaren Fluidflussunterbrechungsvorrichtung (16a-16h), die dazu vorgesehen ist, ein Leerlaufen eines Fluidbehältnisses (18a; 18g), insbesondere durch einen Siphon-Effekt, zu verhindern.

Es wird vorgeschlagen, dass die, insbesondere als eine zumindest teilautomatische Anti-Siphon-Vorrichtung ausgebildete, Fluidflussunterbrechungsvorrichtung (16a-16h) dazu vorgesehen ist, zumindest teilautomatisch ein Leerlaufen des Fluidbehältnisses (18a; 18g) zu verhindern.

## Beschreibung

### Stand der Technik

Es ist bereits ein Bewässerungssystem, insbesondere ein Gartenbewässerungssystem, mit zumindest einem Leitungselement, insbesondere einem Gartenschlauch und/oder einem Gartenschlauchadapter, das dazu vorgesehen ist, zumindest ein Fluid, insbesondere Regenwasser, zu leiten, und mit zumindest einer mit dem Leitungselement fluidtechnisch koppelbaren Fluidflussunterbrechungsvorrichtung, die dazu vorgesehen ist, ein Leerlaufen eines Fluidbehältnisses, insbesondere durch einen Siphon-Effekt, zu verhindern, vorgeschlagen worden.

### Offenbarung der Erfindung

Die Erfindung geht aus von einem Bewässerungssystem, insbesondere von einem Gartenbewässerungssystem, mit zumindest einem Leitungselement, insbesondere einem Gartenschlauch und/oder einem Gartenschlauchadapter, das dazu vorgesehen ist, zumindest ein Fluid, insbesondere Regenwasser, zu leiten, und mit zumindest einer mit dem Leitungselement fluidtechnisch koppelbaren Fluidflussunterbrechungsvorrichtung, die dazu vorgesehen ist, ein Leerlaufen eines Fluidbehältnisses, insbesondere durch einen Siphon-Effekt, zu verhindern, insbesondere zumindest teilautomatisch einem Leerlaufen eines Fluidbehältnisses, insbesondere durch einen Siphon-Effekt, entgegenzuwirken.

Es wird vorgeschlagen, dass die, insbesondere als eine zumindest teilautomatische Anti-Siphon-Vorrichtung ausgebildete, Fluidflussunterbrechungsvorrichtung dazu vorgesehen ist, zumindest teilautomatisch ein Leerlaufen des Fluidbehältnisses zu verhindern.

Das Bewässerungssystem ist bevorzugt als ein Gartenbewässerungssystem ausgebildet, insbesondere zu einem Einsatz in einem Gartenumfeld, wie beispielsweise einem Privatgarten, einer öffentlichen Garten- oder Parkanlage, einer landwirtschaftlich genutzten Fläche o. dgl., vorgesehen. Insbesondere ist das Bewässerungssystem zu einer direkten und/oder indirekten Bewässerung von Pflanzen, insbesondere von Nutzpflanzen, Zierpflanzen und/oder Rasen, vorgesehen. Insbesondere ist das Bewässerungssystem zu einer Beförderung von einem, insbesondere neben einem Umgebungsluftdruck, druckbeaufschlagungsfreien Fluid vorgesehen. Vorzugsweise kann das Bewässerungssystem den Pflanzen ein Fluid, insbesondere ein Regenwasser, zu einer direkten Bewässerung durch das Leitungselement oder durch zumindest ein weiteres Leitungselement zuführen. Vorzugsweise ist das Bewässerungssystem zu einer indirekten Bewässerung dazu vorgesehen, zumindest einem Bewässerungsgerät ein Fluid, insbesondere Regenwasser, zuzuführen, wobei das zumindest eine Bewässerungsgerät dazu vorgesehen ist, den Pflanzen das Fluid zuzuführen. Insbesondere ist das Bewässerungssystem mit dem zumindest einen Bewässerungsgerät fluidtechnisch koppelbar. Insbesondere kann das Bewässerungssystem das zumindest eine Bewässerungsgerät umfassen. Das zumindest eine Bewässerungsgerät kann insbesondere als ein manuelles Bewässerungsgerät, beispielsweise als ein Gartenschlauch oder als eine Gartenbrause, oder als ein zumindest teilautomatisches Bewässerungsgerät, beispielsweise als eine automatische Bewässerungsanlage, als eine Beregnungsanlage, als ein Rasensprenger o. dgl., ausgebildet sein. Bevorzugt ist das Bewässerungssystem zu einem Einsatz mit zumindest einem zumindest teilautomatischen Bewässerungsgerät, insbesondere zu einer Realisierung einer zeitschaltungsgesteuerten Bewässerung, vorgesehen. Unter "vorgesehen" soll insbesondere speziell ausgestattet und/oder speziell eingerichtet verstanden werden. Unter "eingerichtet" soll insbesondere speziell programmiert und/oder speziell ausgelegt verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt. Das zumindest eine Leitungselement ist vorzugsweise als ein Schlauch, insbesondere als ein Gartenschlauch, als ein Gartenschlauchadapter, als ein Rohr oder als ein anderes, einem Fachmann als sinnvoll erscheinendes Leitungselement ausgebildet. Das Leitungselement ist insbesondere zu einer zumindest abschnittsweisen Anordnung in einem zu leitenden Fluid, insbesondere in einem das Fluid beinhaltenden Fluidbehältnis, insbesondere in einer Regentonne, vorgesehen. Vorzugsweise ist das Leitungselement, insbesondere unterhalb eines Fluidspiegels, fluidtechnisch mit zumindest einer Pumpeinheit, insbesondere einer Tauchpumpe, koppelbar, insbesondere mittels eines Schlauchadapters. Insbesondere kann das Bewässerungssystem die Pumpeinheit und/oder den Schlauchadapter umfassen. Alternativ ist vorstellbar, dass das Bewässerungssystem, insbesondere das Leitungselement, mit einer externen Pumpeinheit koppelbar ist. Die Pumpeinheit ist insbesondere dazu vorgesehen, ein Fluid, insbesondere ein in dem Fluidbehältnis beinhaltetes Fluid, durch das Leitungselement, insbesondere aus dem Fluidbehältnis hinaus, zu befördern, insbesondere zu pumpen. Die Pumpeinheit ist insbesondere zu einer zumindest abschnittsweisen Anordnung in einem zu leitenden Fluid, insbesondere in dem das Fluid beinhaltenden Fluidbehältnis, insbesondere in der Regentonne, vorgesehen.

Vorzugsweise ist das Leitungselement an einer von einer fluidtechnisch mit der Pumpeinheit koppelbaren Einlassöffnung verschiedenen Auslassöffnung fluidtechnisch mit der Fluidflussunterbrechungsvorrichtung koppelbar. Insbesondere ist das Leitungselement dazu vorgesehen, der Fluidflussunterbrechungsvorrichtung ein Fluid zuzuleiten, wobei die Fluidflussunterbrechungsvorrichtung in zumindest einem Betriebszustand dazu vorgesehen ist, das Fluid weiterzuleiten. Vorzugsweise umfasst das Bewässerungssystem zumindest eine Koppeleinheit, die zu einer fluidtechnischen Kopplung des Leitungselements mit der Fluidflussunterbrechungsvorrichtung vorgesehen ist. Insbesondere kann die Koppeleinheit als ein Dreh- und/oder Klemmverbinder, als ein Klickverbinder, als ein Schraubverbinder oder als eine andere, einem Fachmann als sinnvoll erscheinende Koppeleinheit ausgebildet sein. Bevorzugt umfasst die Fluidflussunterbrechungsvorrichtung die Koppeleinheit. Insbesondere kann die Koppeleinheit an einer Gehäuseeinheit der Fluidflussunterbrechungsvorrichtung, insbesondere an einem Einlassbereich der Gehäuseeinheit, angeordnet sein und/oder zumindest teilweise von der Gehäuseeinheit ausgebildet sein. Alternativ ist vorstellbar, dass das Leitungselement fest, insbesondere stoffschlüssig, mit der Fluidflussunterbrechungsvorrichtung verbunden ist.

Die Fluidflussunterbrechungsvorrichtung weist zumindest einen von dem mit dem Leitungselement koppelbaren Einlassbereich verschiedenen Auslassbereich auf, in dem eine Ausgabe eines Fluids erfolgen kann. Der Auslassbereich kann insbesondere als ein Kopplungsbereich, insbesondere als ein Adapterbereich, zu einer fluidtechnischen Kopplung, insbesondere einer lösbaren Kopplung, mit zumindest einem weiteren Leitungselement ausgebildet sein. Insbesondere kann das Bewässerungssystem das weitere Leitungselement umfassen. Alternativ ist vorstellbar, dass das weitere Leitungselement als ein externes Leitungselement ausgebildet, beispielsweise einem externen Bewässerungsgerät zugeordnet, ist. In Abhängigkeit von einer Anordnung des Auslassbereichs der Fluidflussunterbrechungsvorrichtung und/oder einer Auslassöffnung des weiteren, mit der Fluidflussunterbrechungsvorrichtung gekoppelten Leitungselements kann insbesondere unabhängig von einer aktiven Beförderung, insbesondere nach einem Abschalten der Pumpeinheit, ein Fluid durch das Bewässerungssystem, insbesondere durch das Leitungselement, aus dem Fluidbehältnis fließen, insbesondere aufgrund des Siphon-Effekts. Unter einem "Siphon-Effekt" soll insbesondere ein Fließen eines Fluids, insbesondere einer Flüssigkeit, in einer Fluidleitung von einem ersten Punkt zu einem niedrig gelegeneren zweiten Punkt verstanden werden, wobei das Fluid ausgehend von dem ersten Punkt insbesondere in der Fluidleitung in Abhängigkeit von einem Druckunterschied zu einem höchstgelegenen Punkt der Fluidleitung fließt und insbesondere von dem höchstgelegenen Punkt der Fluidleitung in Abhängigkeit von einer Gravitationskraft zu dem zweiten Punkt fließt. Insbesondere kann das Fluid aufgrund eines Höhenunterschieds zwischen dem Auslassbereich der Fluidflussunterbrechungsvorrichtung und/oder der Auslassöffnung des weiteren Leitungselements und dem Fluidspiegel, insbesondere in dem Fluidbehältnis, durch das Bewässerungssystem, insbesondere durch das Leitungselement, fließen, insbesondere solange bis der Fluidspiegel auf einer selben Höhe wie der Auslassbereich der Fluidflussunterbrechungsvorrichtung und/oder der Auslassöffnung des weiteren Leitungselements angeordnet ist. Insbesondere kann in Abhängigkeit von einer Anordnung des Auslassbereichs der Fluidflussunterbrechungsvorrichtung und/oder der Auslassöffnung des weiteren Leitungselements unterhalb eines minimalen Fluidspiegels, insbesondere unterhalb eines Bodens des Fluidbehältnisses, sämtliches Fluid aus dem Fluidbehältnis herausfließen, insbesondere das Fluidbehältnis leerlaufen.

Die Fluidflussunterbrechungsvorrichtung ist vorzugsweise dazu vorgesehen, den Siphon-Effekt zumindest teilautomatisch zu stoppen, insbesondere zu einer Verhinderung eines Leerlaufens des Fluidbehältnisses. Insbesondere ist die Fluidflussunterbrechungsvorrichtung verschieden von einer manuell betätigbaren Fluidflussunterbrechungsvorrichtung, insbesondere von einem Drehventil, ausgebildet. Insbesondere ist die Fluidflussunterbrechungsvorrichtung verschieden von einer automatisch elektrisch, magnetisch und/oder mechanisch betätigbaren Fluidflussunterbrechungsvorrichtung ausgebildet. Bevorzugt ist die Fluidflussunterbrechungsvorrichtung als eine, insbesondere automatisch, druckabhängig, insbesondere differenzdruckabhängig, betätigbare Fluidflussunterbrechungsvorrichtung ausgebildet. Insbesondere ist die Fluidflussunterbrechungsvorrichtung als ein druckgesteuertes Ventil, insbesondere als ein Sicherheitsventil, ausgebildet. Vorzugsweise weist die Fluidflussunterbrechungsvorrichtung zumindest zwei Betriebszustände auf, wobei die Fluidflussunterbrechungsvorrichtung in einem ersten Betriebszustand dazu vorgesehen ist, einen Fluidfluss zu erlauben und in einem zweiten Betriebszustand dazu vorgesehen ist, einen Fluidfluss zu unterbrechen. Insbesondere ist die Fluidflussunterbrechungsvorrichtung dazu vorgesehen, in Abhängigkeit von einer aktiven Beförderung eines Fluids durch das Bewässerungssystem, insbesondere mittels der Pumpeinheit, einen Fluidfluss zu erlauben. Insbesondere ist die Fluidflussunterbrechungsvorrichtung dazu vorgesehen, in Abhängigkeit von einem passiven Fluidfluss durch das Bewässerungssystem, insbesondere in Abhängigkeit von einer deaktivierten Pumpeinheit, den Fluidfluss zu unterbrechen. Insbesondere erzeugt eine aktive Beförderung eines Fluids, insbesondere die aktivierte Pumpeinheit, einen Druck, insbesondere einen Fluiddruck, in der Fluidflussunterbrechungsvorrichtung, der höher ist als ein Umgebungsdruck, insbesondere ein Umgebungsluftdruck, der Fluidflussunterbrechungsvorrichtung. Insbesondere schließt zumindest ein Wirkelement der Fluidflussunterbrechungsvorrichtung in Abhängigkeit von einem Überdruck in der Fluidflussunterbrechungsvorrichtung, insbesondere automatisch, zumindest eine Ventilöffnung der Fluidflussunterbrechungsvorrichtung, was insbesondere einen Fluidfluss durch das Bewässerungssystem, insbesondere durch die Fluidflussunterbrechungsvorrichtung, erlaubt. Insbesondere gleicht sich ein Druck, insbesondere ein Fluiddruck, in der Fluidflussunterbrechungsvorrichtung in Abhängigkeit von einem passiven Fluidfluss, insbesondere in Abhängigkeit von einer deaktivierten Pumpeinheit, an einen Umgebungsdruck, insbesondere an einen Umgebungsluftdruck, der Fluidflussunterbrechungsvorrichtung an. Insbesondere öffnet das Wirkelement in Abwesenheit eines Überdrucks in der Fluidflussunterbrechungsvorrichtung, insbesondere automatisch, die Ventilöffnung der Fluidflussunterbrechungsvorrichtung. Insbesondere kann in Abhängigkeit von einer geöffneten Ventilöffnung Umgebungsluft in die Fluidflussunterbrechungsvorrichtung einströmen, was insbesondere den Siphon-Effekt stoppt und insbesondere einen Fluidfluss unterbricht.

Durch die erfindungsgemäße Ausgestaltung des Bewässerungssystems kann vorteilhaft ein Leerlaufen eines Fluidbehältnisses unterbunden werden. Vorteilhaft kann eine sichere Pflanzenbewässerung ermöglicht werden. Vorteilhaft kann ein automatisches, insbesondere zeitschaltsteuerbares, und fluidökonomisches Bewässerungssystem bereitgestellt werden. Vorteilhaft kann ein nutzerkomfortables, nutzersicheres und effizientes Bewässerungssystem bereitgestellt werden.

Zudem wird vorgeschlagen, dass das Bewässerungssystem zumindest eine Befestigungsvorrichtung umfasst, die zu einer Aufnahme des Leitungselements und/oder der Fluidflussunterbrechungsvorrichtung zumindest ein Führungselement aufweist, und die zumindest einen Befestigungsbereich, insbesondere eine Anlagefläche, aufweist, der/die dazu vorgesehen ist, die Fluidflussunterbrechungsvorrichtung, insbesondere werkzeuglos, an dem Fluidbehältnis, insbesondere an einer Oberkante des Fluidbehältnisses, zu befestigen. Die Befestigungsvorrichtung, insbesondere das Führungselement, ist vorzugsweise zu einer Aufnahme des Leitungselements und der Fluidflussunterbrechungsvorrichtung vorgesehen. Vorzugsweise kann das Führungselement das Leitungselement auch unabhängig von der Fluidflussunterbrechungsvorrichtung aufnehmen, insbesondere führen. Vorzugsweise ist das Führungselement rohrartig ausgebildet. Insbesondere ist das Führungselement als ein in Umfangsrichtung teilgeöffnetes Rohr, insbesondere als eine Rohrhälfte, ausgebildet. Insbesondere weist das Führungselement einen U-förmigen Querschnitt auf. Alternativ ist vorstellbar, dass das Führungselement als ein in Umfangsrichtung geschlossenes Rohr, insbesondere mit einem O-förmigen Querschnitt, ausgebildet ist. Insbesondere weist das Führungselement einen nichtlinearen Verlauf auf, ist insbesondere gebogen ausgebildet. Vorzugsweise ist das Führungselement zu einer losen Aufnahme und/oder einer mittelbaren Fixierung des Leitungselements vorgesehen. Insbesondere kann die Fluidflussunterbrechungsvorrichtung an der Befestigungsvorrichtung, insbesondere an dem Führungselement, fixiert sein und kann das Leitungselement an der Fluidflussunterbrechungsvorrichtung fixiert sein. Das Führungselement ist vorzugsweise aus einem Kunststoff, aus einem Verbundwerkstoff, aus einem Metall oder aus einem anderen, einem Fachmann als sinnvoll erscheinenden Werkstoff ausgebildet.

Der Befestigungsbereich, insbesondere die Anlagefläche, ist vorzugsweise zumindest teilweise, insbesondere vollständig, von dem Führungselement ausgebildet. Alternativ ist vorstellbar, dass der Befestigungsbereich getrennt von dem Führungselement, insbesondere von einem separaten Bauteil der Befestigungsvorrichtung, ausgebildet ist. Vorzugsweise weist das Führungselement eine Innenfläche auf, an der das Leitungselement und/oder die Fluidflussunterbrechungsvorrichtung anliegen/anliegt. Vorzugsweise ist der Befestigungsbereich, insbesondere die Anlagefläche, als eine Außenfläche des Führungselements ausgebildet, die auf einer der Innenfläche des Führungselements abgewandten Seite des Führungselements angeordnet ist. Vorzugsweise ist die Befestigungsvorrichtung dazu vorgesehen, mit dem Befestigungsbereich zu einer Befestigung der aufgenommenen Fluidflussunterbrechungsvorrichtung an dem Fluidbehältnis an dem Fluidbehältnis, insbesondere an der Oberkante des Fluidbehältnisses, anzuliegen, insbesondere aufzuliegen. Insbesondere ist die Befestigungsvorrichtung dazu vorgesehen, die Oberkante, insbesondere einen oberen Rand, des Fluidbehältnisses zumindest abschnittsweise zu umgreifen. Insbesondere ist die Befestigungsvorrichtung dazu vorgesehen, durch eine Auflagekraft und/oder durch ein zumindest abschnittsweises Umgreifen der Oberkante des Fluidbehältnisses an dem Fluidbehältnis zu halten. Insbesondere ist die Befestigungsvorrichtung frei von Werkzeug, insbesondere frei von zusätzlichen Befestigungsmitteln, wie beispielsweise Schrauben, Klemmen, Nägeln o. dgl., an dem Fluidbehältnis anbringbar. Vorzugsweise ist die Befestigungsvorrichtung dazu vorgesehen, die Fluidflussunterbrechungsvorrichtung oberhalb von einem Fluidspiegel in dem Fluidbehältnis an dem Fluidbehältnis zu befestigen. Vorteilhaft kann eine besonders nutzerkomfortable Anbringung einer Fluidflussunterbrechungsvorrichtung an dem Fluidbehältnis, insbesondere an einer geeigneten Position zur Unterbindung eines Siphon-Effekts, ermöglicht werden.

Des Weiteren wird vorgeschlagen, dass die Befestigungsvorrichtung zumindest eine Fixiereinheit zu einer, insbesondere werkzeuglosen, Fixierung der Fluidflussunterbrechungsvorrichtung aufweist. Die Fixiereinheit ist vorzugsweise zu einer Fixierung der Fluidflussunterbrechungsvorrichtung in einer definierten Position relativ zu dem aufgenommenen Leitungselement vorgesehen. Insbesondere ist die Fixiereinheit zumindest teilweise, bevorzugt vollständig, von dem Führungselement ausgebildet. Vorzugsweise ist die Fixiereinheit einteilig mit dem Führungselement ausgebildet. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Insbesondere bildet die Fixiereinheit einen, in einem an einem Fluidbehältnis befestigten Zustand insbesondere außerhalb des Fluidbehältnisses angeordneten, Endbereich des Führungselements aus. Insbesondere ist die Fixiereinheit als eine zumindest abschnittsweise Verengung des Führungselements, insbesondere in dem Endbereich, ausgebildet. Alternativ ist vorstellbar, dass die Fixiereinheit als eine von dem Führungselement separate, insbesondere kraft- und/oder formschlüssig mit dem Führungselement verbundene, Einheit ausgebildet ist. Insbesondere ist die Fixiereinheit dazu vorgesehen, in einem demontierten Zustand der Fluidflussunterbrechungsvorrichtung das Leitungselement zu führen. Vorzugsweise ist die Fixiereinheit zu einer Fixierung der Fluidflussunterbrechungsvorrichtung frei von zusätzlichen Befestigungselementen, wie Schrauben, Bolzen, Haken o. dgl., und/oder Werkzeugen, wie Schraubendrehern, Zangen, Schraubenschlüssel o. dgl., vorgesehen. Vorteilhaft kann nutzerkomfortabel eine korrekte Positionierung der Fluidflussunterbrechungsvorrichtung an der Befestigungsvorrichtung ermöglicht werden.

Ferner wird vorgeschlagen, dass die Fluidflussunterbrechungsvorrichtung zumindest eine mit der Fixiereinheit der Befestigungsvorrichtung zusammenwirkende Gegenfixiereinheit zu einer, insbesondere lösbaren, Kopplung mit der Befestigungsvorrichtung aufweist. Insbesondere ist die Gegenfixiereinheit zumindest teilweise, bevorzugt vollständig, von der Gehäuseeinheit der Fluidflussunterbrechungsvorrichtung ausgebildet. Vorzugsweise ist die Gegenfixiereinheit einteilig mit der Gehäuseeinheit ausgebildet. Insbesondere ist die Gegenfixiereinheit durch eine Formgebung der Gehäuseeinheit gebildet. Insbesondere ist die Gegenfixiereinheit zumindest teilweise von einem Verengungsbereich der Gehäuseeinheit gebildet, der in einem montierten Zustand zumindest teilweise von der Fixiereinheit, insbesondere von der zumindest abschnittsweisen Verengung des Führungselements, umschlossen ist. Vorzugsweise weist die Gehäuseeinheit in dem Verengungsbereich einen maximalen Durchmesser auf, der maximal einem maximalen Durchmesser der zumindest abschnittsweisen Verengung des Führungselements entspricht. Vorzugsweise ist die Gegenfixiereinheit zumindest teilweise von zumindest zwei, entlang einer Längsachse der Gehäuseeinheit betrachtet vor und hinter dem Verengungsbereich angeordneten Gegenfixierelementen der Gehäuseeinheit gebildet. Die Gegenfixierelemente weisen vorzugsweise einen größeren maximalen Durchmesser auf als die zumindest abschnittsweise Verengung des Führungselements. Insbesondere sind die Gegenfixierelemente dazu vorgesehen, eine Verschiebung der Fluidflussunterbrechungsvorrichtung an dem Führungselement entlang der Längsachse der Fluidflussunterbrechungsvorrichtung zu unterbinden. Vorzugsweise ist zumindest eines der Gegenfixierelemente zumindest teilweise von dem Einlassbereich der Gehäuseeinheit gebildet. Vorzugsweise ist die Ventilöffnung der Fluidflussunterbrechungsvorrichtung an dem Verengungsbereich angeordnet. Alternativ ist vorstellbar, dass die Gegenfixiereinheit als eine von der Gehäuseeinheit separate, insbesondere kraft- und/oder formschlüssig mit der Gehäuseeinheit verbundene, Einheit ausgebildet ist. Vorteilhaft kann eine nutzerkomfortable Montage der Fluidflussunterbrechungsvorrichtung an der Befestigungsvorrichtung ermöglicht werden.

Weiterhin wird vorgeschlagen, dass die Fixiereinheit und/oder die Gegenfixiereinheit als Klickverbinder ausgebildet sind/ist. Vorzugsweise sind die Fixiereinheit und die Gegenfixiereinheit als Klickverbinder ausgebildet. Insbesondere ist die Gegenfixiereinheit, insbesondere werkzeuglos, in die Fixiereinheit einklickbar und aus der Fixiereinheit ausklickbar. Insbesondere ist die Gegenfixiereinheit in der Fixiereinheit festklemmbar, mit der Fixiereinheit verrastbar o. dgl. Insbesondere kann die Fixiereinheit zumindest ein Rastelement, insbesondere eine Rastnase, eine Rastkante, einen Rastvorsprung o. dgl., aufweisen, das zu einer Verrastung mit zumindest einem Gegenrastelement der Gegenfixiereinheit vorgesehen ist. Vorzugsweise ist eine Kopplung zwischen der Fixiereinheit und der Gegenfixiereinheit werkzeuglos lösbar, insbesondere durch eine zumindest abschnittsweise Federelastizität der Fixiereinheit und/oder der Gegenfixiereinheit. Alternativ oder zusätzlich ist denkbar, dass die Fixiereinheit und/oder die Gegenfixiereinheit zumindest ein Entriegelungselement zu einer Lösung einer Kopplung aufweisen/aufweist. Vorteilhaft kann eine werkzeuglose und zerstörungsfreie Kopplung und Entkopplung der Fluidflussunterbrechungsvorrichtung mit der Befestigungsvorrichtung, insbesondere mit dem Führungselement, ermöglicht werden.

Zudem wird vorgeschlagen, dass der Befestigungsbereich abgewinkelt, insbesondere U-förmig, ausgebildet ist. Insbesondere ist die komplette Befestigungsvorrichtung, insbesondere das Führungselement, abgewinkelt, insbesondere U-förmig, ausgebildet. Alternativ ist denkbar, dass der Befestigungsbereich halbkreisförmig, V-förmig, L-förmig oder auf eine andere, einem Fachmann als sinnvoll erscheinende Weise abgewinkelt ausgebildet ist. Insbesondere weist der Befestigungsbereich zumindest zwei winklig, insbesondere unter einem Winkel von kleiner als 180° und größer als 0°, zueinander ausgerichtete Teilbereiche auf. Vorzugsweise sind die Teilbereiche über einen abgerundeten, insbesondere kurvenförmigen, Mittelbereich des Befestigungsbereichs miteinander verbunden. Insbesondere ist der Befestigungsbereich frei von harten Kanten ausgebildet. Es kann eine Befestigungsvorrichtung mit einem zu einer Befestigung an einem Fluidbehältnis vorteilhaft geformten Befestigungsbereich bereitgestellt werden.

Des Weiteren wird vorgeschlagen, dass die Befestigungsvorrichtung mittels des Befestigungsbereichs an einem Rand, insbesondere an einer Oberkante, des Fluidbehältnisses einhakbar ist. Insbesondere ist der Befestigungsbereich hakenartig ausgebildet. Vorzugsweise ist die Befestigungsvorrichtung dazu vorgesehen, insbesondere unter einem Gewicht des aufgenommenen Leitungselements und/oder der aufgenommenen Fluidflussunterbrechungsvorrichtung, an dem Mittelbereich des Befestigungsbereichs auf dem Rand, insbesondere auf der Oberkante, des Fluidbehältnisses aufzuliegen. Insbesondere ist die Befestigungsvorrichtung dazu vorgesehen, mittels der Teilbereiche des Befestigungsbereichs den Rand, insbesondere die Oberkante, des Fluidbehältnisses, insbesondere beidseitig, zu umgreifen, insbesondere zu umhaken. Insbesondere sind die Teilbereiche dazu vorgesehen, eine Kippbewegung der Befestigungsvorrichtung in einem an dem Rand, insbesondere an der Oberkante, des Fluidbehältnisses angeordneten Zustand zumindest teilweise zu unterbinden. Insbesondere sind die Teilbereiche unter einem Winkel von zumindest 15°, bevorzugt unter einem Winkel von zumindest 30° und besonders bevorzugt unter einem Winkel von zumindest 45° relativ zueinander ausgerichtet, insbesondere zu einer Verwendung mit unterschiedlichen Fluidbehältnissen, die unterschiedlich breite Ränder, insbesondere Oberkanten, aufweisen. Alternativ ist vorstellbar, dass eine Winkelausrichtung der Teilbereiche relativ zueinander einstellbar ist, insbesondere in Abhängigkeit von der Breite des Rands, insbesondere der Oberkante, des Fluidbehältnisses. Insbesondere kann die Befestigungsvorrichtung zu einer Realisierung einer Einstellbarkeit zumindest in dem Befestigungsbereich zumindest teilweise elastisch ausgebildet sein, eine Winkelverstelleinheit aufweisen o. dgl. Die Befestigungsvorrichtung kann zumindest in dem Befestigungsbereich zumindest eine haftverstärkende Beschichtung, Oberflächenbehandlung o. dgl. aufweisen, insbesondere zu einer Verbesserung einer Haltekraft an dem Rand, insbesondere an der Oberkante, des Fluidbehältnisses. Vorteilhaft kann eine nutzerkomfortable, insbesondere werkzeuglose, Montage der Befestigungsvorrichtung an dem Rand, insbesondere an der Oberkante, des Fluidbehältnisses ermöglicht werden.

Ferner wird vorgeschlagen, dass das Führungselement gebogen, insbesondere U-förmig, ausgebildet ist und dazu vorgesehen ist, das Leitungselement, insbesondere in einem an einem, insbesondere an dem vorgenannten, Rand des Fluidbehältnisses befestigten Zustand, zumindest im Wesentlichen knickfrei aufzunehmen. Vorzugsweise ist das Führungselement analog zu dem Befestigungsbereich gebogen, insbesondere U-förmig, ausgebildet. Insbesondere weist das Führungselement einen gleichen Krümmungsradius wie der Befestigungsbereich auf. Insbesondere bildet das Führungselement den Befestigungsbereich aus. Alternativ ist vorstellbar, dass das Führungselement und der Befestigungsbereich unterschiedlich gebogen und/oder abgewinkelt ausgebildet sind. Insbesondere ist das Führungselement dazu vorgesehen, das aufgenommene Leitungselement entlang einer Kurve zu führen. Insbesondere folgt das von dem Führungselement aufgenommene Leitungselement einer gebogenen Kontur des Führungselements. Vorzugsweise weist das Führungselement einen derartigen Krümmungsradius, insbesondere einen Winkel zwischen zumindest zwei Schenkeln des Führungselements, die insbesondere die Teilbereiche des Befestigungsbereichs ausbilden, auf, dass das Leitungselement knickfrei aufnehmbar ist. Insbesondere sind die Schenkel unter einem Winkel von zumindest 15°, bevorzugt unter einem Winkel von zumindest 30° und besonders bevorzugt unter einem Winkel von zumindest 45° relativ zueinander ausgerichtet. Insbesondere sind die Schenkel unter einem Winkel von höchstens 120°, bevorzugt von höchstens 90° und besonders bevorzugt von höchstens 60° relativ zueinander ausgerichtet. Alternativ ist vorstellbar, dass eine Winkelausrichtung der Schenkel relativ zueinander einstellbar ist, insbesondere in Abhängigkeit von einer Art, insbesondere eines Durchmessers, eines aufgenommenen Leitungselements. Vorteilhaft kann eine materialschonende Führung des Leitungselements ermöglicht werden und vorteilhaft ein wartungsarmes Bewässerungssystem bereitgestellt werden.

Weiterhin wird vorgeschlagen, dass die Fluidflussunterbrechungsvorrichtung als ein Sicherheitsventil, insbesondere als ein Kugelventil, ausgebildet ist. Insbesondere ist das Wirkelement der Fluidflussunterbrechungsvorrichtung als eine Ventilkugel ausgebildet. Alternativ ist vorstellbar, dass die Fluidflussunterbrechungsvorrichtung als ein Entenschnabelventil, als ein Prallventil, als ein Rückschlagventil, als ein Ventil mit Belüftungsschlauch, als ein Rückflussverhinderer oder als eine andere, einem Fachmann als sinnvoll erscheinende Fluidflussunterbrechungsvorrichtung ausgebildet ist. Vorzugsweise ist die Fluidflussunterbrechungsvorrichtung als ein differenzdruckabhängiges Ventil ausgebildet. Zusätzlich ist denkbar, dass die Fluidflussunterbrechungsvorrichtung zumindest ein Rückstellelement, insbesondere eine Druckfeder, zu einer Druckbeaufschlagung des Wirkelements aufweist. Vorteilhaft kann eine effektive Fluidflussunterbrechung ermöglicht werden.

Zudem wird vorgeschlagen, dass die Fluidflussunterbrechungsvorrichtung zumindest eine Überdruckentlastungseinheit aufweist, die dazu vorgesehen ist, in Abhängigkeit von einem überstiegenen Grenzdruck in der Fluidflussunterbrechungsvorrichtung ein Fluid austreten zu lassen. Insbesondere kann ein Druck, insbesondere ein Fluiddruck, in der Fluidflussunterbrechungsvorrichtung einen Normalbetriebsdruck in der Fluidflussunterbrechungsvorrichtung in Abhängigkeit von einer Fehlfunktion der Fluidflussunterbrechungsvorrichtung und/oder der Pumpeinheit, in Abhängigkeit von einer Verstopfung des Leitungselements und/oder des weiteren Leitungselements, o. dgl. überschreiten. Vorzugsweise ist die Fluidflussunterbrechungsvorrichtung dazu vorgesehen, einem Druck kleiner als der Grenzdruck standzuhalten. Der Grenzdruck kann beispielsweise einen Wert von vier Bar aufweisen. Die Überdruckentlastungseinheit ist vorzugsweise dazu vorgesehen, einen Druck in der Fluidflussunterbrechungsvorrichtung, insbesondere durch ein Austretenlassen von einem Fluid aus der Fluidflussunterbrechungsvorrichtung, unter den Grenzdruck zu senken.

Vorzugsweise umfasst die Überdruckentlastungseinheit zumindest eine Druckentlastungsöffnung in einem Fluidkanal der Fluidflussunterbrechungsvorrichtung, durch den ein Fluid strömen kann. Vorzugsweise verbindet die Druckentlastungsöffnung den Fluidkanal fluidtechnisch mit einem Wirkelementbereich der Fluidflussunterbrechungsvorrichtung, in dem das Wirkelement angeordnet ist. Vorzugsweise weist die Überdruckentlastungseinheit zumindest eine weitere Druckentlastungsöffnung in einer Seitenwandung des Wirkelementbereichs auf. Vorzugsweise kann ein Fluid in einer Überdrucksituation aus dem Fluidkanal durch die Druckentlastungsöffnung in den Wirkelementbereich und an dem Wirkelement vorbei durch die zumindest eine weitere Druckentlastungsöffnung aus der Fluidflussunterbrechungsvorrichtung fließen. Vorzugsweise weist die Überdruckentlastungseinheit zumindest zwei weitere Druckentlastungsöffnungen auf, die insbesondere auf voneinander abgewandten Seiten eines Ventilöffnungseinsatzes der Fluidflussunterbrechungsvorrichtung angeordnet sind. Vorzugsweise erstrecken sich Längsachsen der weiteren Druckentlastungsöffnungen quer, insbesondere zumindest im Wesentlichen senkrecht, zu einer Längsachse der Druckentlastungsöffnung. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise weisen die weiteren Druckentlastungsöffnungen eine kombinierte Querschnittsöffnungsfläche auf, die einer Querschnittöffnungsfläche der Druckentlastungsöffnung entspricht. Alternativ ist vorstellbar, dass die Querschnittsöffnungsfläche jeder weiteren Druckentlastungsöffnung der Querschnittsöffnungsfläche der Druckentlastungsöffnung entspricht. Vorteilhaft kann eine kontrollierte Druckentlastung der Fluidflussunterbrechungsvorrichtung ermöglicht werden. Es kann ein vorteilhaft nutzersicheres Bewässerungssystem bereitgestellt werden.

Des Weiteren wird vorgeschlagen, dass die Fluidflussunterbrechungsvorrichtung zumindest eine Abschirmeinheit umfasst, die dazu vorgesehen ist, zumindest ein, insbesondere das vorgenannte, Wirkelement, insbesondere eine Kugel, der Fluidflussunterbrechungsvorrichtung einzukapseln, insbesondere in einer Überdrucksituation. Insbesondere umfasst die Fluidflussunterbrechungsvorrichtung die Abschirmeinheit alternativ oder zusätzlich zu der Überdruckentlastungseinheit. Vorzugsweise ist die Abschirmeinheit dazu vorgesehen, ein Austreten des, insbesondere durch einen überstiegenen Grenzdruck beschleunigten, Wirkelements aus der Gehäuseeinheit der Fluidflussunterbrechungsvorrichtung zu unterbinden. Insbesondere ist die Abschirmeinheit dazu vorgesehen, das Wirkelement, insbesondere kapselartig, zu umschließen. Vorzugsweise umschließt die Abschirmeinheit das Wirkelement entlang von sämtlichen sich zumindest im Wesentlichen senkrecht zu einer Längsachse des Fluidkanals erstreckenden Raumrichtungen. Insbesondere ist die Abschirmeinheit zumindest abschnittsweise innerhalb der Gehäuseeinheit angeordnet, insbesondere als eine Verstärkung der Gehäuseeinheit ausgebildet. Die Abschirmeinheit kann zu einer Aufnahme einer kinetischen Energie des Wirkelements flexibel, beispielsweise als ein Gummiband, als ein Gurt, als eine Lasche o. dgl., ausgebildet sein. Alternativ kann die Abschirmeinheit auch massiv, beispielsweise aus einem hochfesten Kunststoff oder Verbundwerkstoff, aus einem Stahl o. dgl., ausgebildet sein. Vorteilhaft kann eine alternative Ausbildung der Fluidflussunterbrechungsvorrichtung zu einer Realisierung eines vorteilhaft nutzersicheren Bewässerungssystems bereitgestellt werden.

Ferner wird vorgeschlagen, dass das Bewässerungssystem zumindest eine, insbesondere die vorgenannte, Pumpeinheit, die dazu vorgesehen ist, ein Fluid durch das Leitungselement zu befördern, und zumindest eine Energieversorgungseinheit, insbesondere einen Akkumulator, umfasst, die/der zu einer netzunabhängigen Energieversorgung zumindest der Pumpeinheit vorgesehen ist. Alternativ zu einer Ausbildung als ein Akkumulator ist denkbar, dass die Energieversorgungseinheit als eine Batterie, als ein Speicherkondensator, als eine Solarzelle oder als eine andere, einem Fachmann als sinnvoll erscheinende Energieversorgungseinheit ausgebildet ist. Weiterhin alternativ oder zusätzlich ist denkbar, dass das Bewässerungssystem zumindest eine netzgebundene Energieversorgungseinheit, insbesondere einen Netzanschluss, aufweist. Vorzugsweise umfasst das Bewässerungssystem zumindest eine Halterungseinheit, die dazu vorgesehen ist, die Energieversorgungseinheit, insbesondere zu einer Befestigung außerhalb des Fluidbehältnisses, beispielsweise an einer Hauswand, an dem Rand des Fluidbehältnisses, an einem Gartenzaun o. dgl., zu befestigen. Die Energieversorgungseinheit ist vorzugsweise dazu vorgesehen, die Pumpeinheit mit elektrischer Energie zu versorgen, insbesondere über ein elektrisches Leitungselement, insbesondere über ein Kabel, des Bewässerungssystems. Vorzugsweise ist das elektrische Leitungselement wasserdicht ausgebildet. Insbesondere ist die Pumpeinheit dazu vorgesehen, innerhalb des Fluidbehältnisses, insbesondere an einem Boden des Fluidbehältnisses, angeordnet zu werden. Insbesondere verläuft das elektrische Leitungselement zu einer Energieversorgung der Pumpeinheit von außerhalb des Fluidbehältnisses durch ein Fluid bis zur Pumpeinheit. Vorzugsweise ist das elektrische Leitungselement elektrisch mit der Halterungseinheit gekoppelt. Insbesondere weist die Halterungseinheit elektrische Kontaktelemente zu einer elektrischen Kopplung mit der Energieversorgungseinheit auf. Alternativ ist denkbar, dass das elektrische Leitungselement direkt mit der Energieversorgungseinheit gekoppelt ist. Weiterhin ist vorstellbar, dass die Energieversorgungseinheit wasserdicht ausgebildet ist und unterhalb des Fluidspiegels direkt mit der Pumpeinheit verbunden ist oder dass die Energieversorgungseinheit in einer wasserdichten Aufnahme der Pumpeinheit angeordnet ist. Vorteilhaft kann ein nutzerkomfortabel autarkes Bewässerungssystem bereitgestellt werden.

Weiterhin wird vorgeschlagen, dass das Bewässerungssystem zumindest eine Nutzerinteraktionseinheit umfasst, die dazu eingerichtet ist, einem Nutzer Steuerungsfunktionen für die Pumpeinheit, insbesondere zumindest eine Zeitschaltfunktion, bereitzustellen. Vorzugsweise ist die Nutzerinteraktionseinheit in die Halterungseinheit integriert und/oder an der Halterungseinheit anordenbar. Alternativ oder zusätzlich ist vorstellbar, dass die Nutzerinteraktionseinheit in die Energieversorgungseinheit integriert und/oder an der Energieversorgungseinheit anordenbar ist. Die Nutzerinteraktionseinheit kann insbesondere als eine optische Nutzerinteraktionseinheit, als eine haptische Nutzerinteraktionseinheit und/oder als eine akustische Nutzerinteraktionseinheit ausgebildet sein. Eine optische Nutzerinteraktionseinheit kann zu einer Interaktion mit einem Nutzer zumindest einen, insbesondere berührungsempfindlichen, Bildschirm, zumindest eine Anzeige-Leuchtdiode (Anzeige-LED) o. dgl. umfassen. Ein haptische Nutzerinteraktionseinheit kann zu einer Nutzerinteraktion zumindest einen Schalter, zumindest einen Knopf, zumindest ein Wahlrad o. dgl. umfassen. Eine akustische Nutzerinteraktionseinheit kann zu einer Nutzerinteraktion zumindest einen Lautsprecher zu einer Ausgabe von Hinweisen, zumindest ein Mikrofon zu einer Spracheingabe o. dgl. umfassen.

Vorzugsweise ist die Pumpeinheit mittels der Nutzerinteraktionseinheit steuerbar. Insbesondere ist die Nutzerinteraktionseinheit zu einer Übertragung von Steuerbefehlen an die Pumpeinheit über das elektrische Leitungselement und/oder drahtlos, beispielsweise über WLAN, Bluetooth, Funk o. dgl., mit der Pumpeinheit verbunden. Vorzugsweise kann ein Nutzer an der Nutzerinteraktionseinheit die Pumpeinheit aktivieren und deaktivieren, ein Pumpvolumen einstellen, Bewässerungsprogramme auswählen o. dgl. Bevorzugt kann der Nutzer an der Nutzerinteraktionseinheit zumindest eine Zeitschaltfunktion einstellen, beispielsweise einen Zeitpunkt, zu dem die Pumpeinheit automatisch einen Pumpbetrieb beginnt, einen Zeitpunkt, zu dem die Pumpeinheit automatisch einen Pumpbetrieb beendet, einen Zeitraum, in dem die Pumpeinheit automatisch ein Fluid befördert oder eine andere, einem Fachmann als sinnvoll erscheinende Zeitschaltfunktion. Vorzugsweise kann die Nutzerinteraktionseinheit zumindest eine Überwachungsfunktion zu einer Überwachung der Pumpeinheit und/oder der Energieversorgungseinheit aufweisen. Vorzugsweise kann die Nutzerinteraktionseinheit zumindest teilweise als eine, insbesondere drahtlose, Kommunikationseinheit ausgebildet sein oder zumindest eine, insbesondere drahtlose, Kommunikationseinheit umfassen. Die Kommunikationseinheit kann insbesondere als ein WLAN-Modul, als ein Bluetooth-Modul, als ein NFC-Modul, als ein Funkmodul oder als ein anderes, einem Fachmann als sinnvoll erscheinendes Modul ausgebildet sein. Insbesondere ist denkbar, dass mittels einer externen Einheit Steuerbefehle an die Kommunikationseinheit übertragbar sind, die die Kommunikationseinheit insbesondere zu einer Steuerung der Pumpeinheit an die Pumpeinheit überträgt. Die externe Einheit kann insbesondere als ein Mobiltelefon, als ein Computer, als ein Server, als ein Heimautomatisierungssystem oder als eine andere, einem Fachmann als sinnvoll erscheinende externe Einheit ausgebildet sein. Vorteilhaft kann ein nutzerkomfortabel automatisiertes Bewässerungssystem bereitgestellt werden.

Zudem geht die Erfindung aus von einer, insbesondere von der vorgenannten, Befestigungsvorrichtung für ein erfindungsgemäßes Bewässerungssystem. Vorteilhaft kann eine nutzerkomfortable Befestigungsvorrichtung bereitgestellt werden.

Des Weiteren geht die Erfindung aus von einer, insbesondere von der vorgenannten, Fluidflussunterbrechungsvorrichtung für ein erfindungsgemäßes Bewässerungssystem. Vorteilhaft kann eine nutzerkomfortable und nutzersichere Fluidflussunterbrechungsvorrichtung bereitgestellt werden.

Ferner wird vorgeschlagen, dass die Fluidflussunterbrechungsvorrichtung zumindest eine, insbesondere die vorgenannte, Überdruckentlastungseinheit umfasst, die dazu vorgesehen ist, in Abhängigkeit von einem überstiegenen Grenzdruck ein Fluid austreten zu lassen. Vorteilhaft kann eine kontrollierte Druckentlastung der Fluidflussunterbrechungsvorrichtung ermöglicht werden. Es kann eine vorteilhaft nutzersichere Fluidflussunterbrechungsvorrichtung bereitgestellt werden.

Das erfindungsgemäße Bewässerungssystem, die erfindungsgemäße Befestigungsvorrichtung und/oder die erfindungsgemäße Fluidflussunterbrechungsvorrichtung sollen/soll hierbei nicht auf die oben beschriebene Anwendung und Ausführungsform beschränkt sein. Insbesondere können/kann das erfindungsgemäße Bewässerungssystem, die erfindungsgemäße Befestigungsvorrichtung und/oder die erfindungsgemäße Fluidflussunterbrechungsvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind acht Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Teilschnittansicht eines erfindungsgemäßen Bewässerungssystems in einer schematischen perspektivischen Darstellung,
- Fig. 2: einen Teil des erfindungsgemäßen Bewässerungssystems aus Fig. 1 in einer schematischen perspektivischen Darstellung,
- Fig. 3: den Teil des erfindungsgemäßen Bewässerungssystems aus Fig. 2 ohne eine erfindungsgemäße Fluidflussunterbrechungsvorrichtung in einer schematischen perspektivischen Darstellung,
- Fig. 4: die erfindungsgemäße Fluidflussunterbrechungsvorrichtung des erfindungsgemäßen Bewässerungssystems aus Fig. 1 in einer schematischen perspektivischen Darstellung,
- Fig. 5: eine Schnittansicht der erfindungsgemäßen Fluidflussunterbrechungsvorrichtung aus Fig. 4 in einer schematischen Darstellung,
- Fig. 6: eine Schnittansicht einer ersten alternativen erfindungsgemäßen Fluidflussunterbrechungsvorrichtung in einer schematischen Darstellung,
- Fig. 7: eine Schnittansicht einer zweiten alternativen erfindungsgemäßen Fluidflussunterbrechungsvorrichtung in einer schematischen Darstellung,
- Fig. 8: einen Teil eines dritten alternativen erfindungsgemäßen Bewässerungssystems in einer schematischen perspektivischen Darstellung,
- Fig. 9: eine Schnittansicht eines Teils eines vierten alternativen erfindungsgemäßen Bewässerungssystems in einer schematischen perspektivischen Darstellung,
- Fig. 10: eine fünfte alternative erfindungsgemäße Fluidflussunterbrechungsvorrichtung in einer schematischen perspektivischen Darstellung,
- Fig. 11: eine Teilschnittansicht eines Teils eines sechsten alternativen erfindungsgemäßen Bewässerungssystems in einer schematischen perspektivischen Darstellung und
- Fig. 12: eine Schnittansicht einer siebten alternativen erfindungsgemäßen Fluidflussunterbrechungsvorrichtung in einer schematischen perspektivischen Darstellung.

### Beschreibung der Ausführungsbeispiele

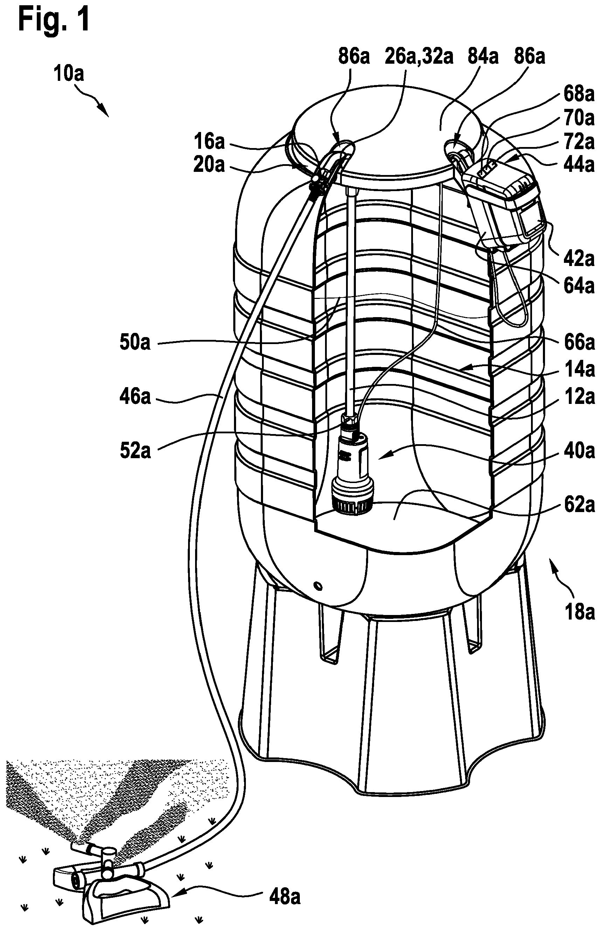

Figur 1 zeigt eine Teilschnittansicht eines Bewässerungssystems 10a, insbesondere Gartenbewässerungssystems, in einer schematischen perspektivischen Darstellung. Vorzugsweise umfasst das Bewässerungssystem 10a zumindest ein Leitungselement 12a, insbesondere einen Gartenschlauch und/oder einen Gartenschlauchadapter, das dazu vorgesehen ist, zumindest ein Fluid 14a, insbesondere Regenwasser, zu leiten, und zumindest eine mit dem Leitungselement 12a fluidtechnisch koppelbare Fluidflussunterbrechungsvorrichtung 16a, die dazu vorgesehen ist, ein Leerlaufen eines Fluidbehältnisses 18a, insbesondere durch einen Siphon-Effekt, zu verhindern. Bevorzugt ist die, insbesondere als eine zumindest teilautomatische Anti-Siphon-Vorrichtung ausgebildete, Fluidflussunterbrechungsvorrichtung 16a dazu vorgesehen, zumindest teilautomatisch ein Leerlaufen des Fluidbehältnisses 18a zu verhindern.

Das Bewässerungssystem 10a ist bevorzugt als ein Gartenbewässerungssystem ausgebildet, insbesondere zu einem Einsatz in einem Gartenumfeld, wie beispielsweise einem Privatgarten, einer öffentlichen Garten- oder Parkanlage, einer landwirtschaftlich genutzten Fläche o. dgl., vorgesehen. Insbesondere ist das Bewässerungssystem 10a zu einer direkten und/oder indirekten Bewässerung von Pflanzen, insbesondere von Nutzpflanzen, Zierpflanzen und/oder Rasen, vorgesehen. Insbesondere ist das Bewässerungssystem 10a zu einer Beförderung von einem, insbesondere neben einem Umgebungsluftdruck, druckbeaufschlagungsfreien Fluid 14a vorgesehen. Vorzugsweise kann das Bewässerungssystem 10a den Pflanzen ein Fluid 14a, insbesondere ein Regenwasser, zu einer direkten Bewässerung durch das Leitungselement 12a oder durch zumindest ein weiteres Leitungselement 46a zuführen. Vorzugsweise ist das Bewässerungssystem 10a zu einer indirekten Bewässerung dazu vorgesehen, zumindest einem Bewässerungsgerät 48a ein Fluid 14a, insbesondere Regenwasser, zuzuführen, wobei das zumindest eine Bewässerungsgerät 48a dazu vorgesehen ist, den Pflanzen das Fluid 14a zuzuführen. Im vorliegenden Ausführungsbeispiel ist das Bewässerungssystem 10a beispielhaft zu einer indirekten Bewässerung vorgesehen. Insbesondere ist das Bewässerungssystem 10a mit dem zumindest einen Bewässerungsgerät 48a fluidtechnisch koppelbar, wie im vorliegenden Ausführungsbeispiel beispielhaft mittels des weiteren Leitungselements 46a. Insbesondere kann das Bewässerungssystem 10a das zumindest eine Bewässerungsgerät 48a umfassen. Das zumindest eine Bewässerungsgerät 48a kann insbesondere als ein manuelles Bewässerungsgerät, beispielsweise als ein Gartenschlauch oder als eine Gartenbrause, oder als ein zumindest teilautomatisches Bewässerungsgerät, beispielsweise als eine automatische Bewässerungsanlage, als eine Beregnungsanlage, als ein Rasensprenger, wie beispielhaft im vorliegenden Ausführungsbeispiel, o. dgl., ausgebildet sein. Bevorzugt ist das Bewässerungssystem 10a zu einem Einsatz mit dem zumindest einen teilautomatischen Bewässerungsgerät 48a, insbesondere zu einer Realisierung einer zeitschaltungsgesteuerten Bewässerung, vorgesehen.

Das zumindest eine Leitungselement 12a ist vorzugsweise als ein Schlauch, insbesondere als ein Gartenschlauch, wie beispielhaft im vorliegenden Ausführungsbeispiel, als ein Gartenschlauchadapter, als ein Rohr oder als ein anderes, einem Fachmann als sinnvoll erscheinendes Leitungselement ausgebildet. Das Leitungselement 12a ist insbesondere zu einer zumindest abschnittsweisen Anordnung in einem zu leitenden Fluid 14a, insbesondere in einem das Fluid 14a beinhaltenden Fluidbehältnis 18a, insbesondere in einer Regentonne, vorgesehen. Vorzugsweise ist das Leitungselement 12a, insbesondere unterhalb eines Fluidspiegels 50a, fluidtechnisch mit zumindest einer Pumpeinheit 40a, insbesondere einer Tauchpumpe, koppelbar, insbesondere mittels eines Schlauchadapters 52a. Insbesondere kann das Bewässerungssystem 10a die Pumpeinheit 40a und/oder den Schlauchadapter 52a umfassen. Alternativ ist vorstellbar, dass das Bewässerungssystem 10a, insbesondere das Leitungselement 12a, mit einer externen Pumpeinheit koppelbar ist. Die Pumpeinheit 40a ist insbesondere dazu vorgesehen, ein Fluid 14a, insbesondere ein in dem Fluidbehältnis 18a beinhaltetes Fluid 14a, durch das Leitungselement 12a, insbesondere aus dem Fluidbehältnis 18a hinaus, zu befördern, insbesondere zu pumpen. Die Pumpeinheit 40a ist insbesondere zu einer zumindest abschnittsweisen Anordnung in einem zu leitenden Fluid 14a, insbesondere in dem das Fluid 14a beinhaltenden Fluidbehältnis 18a, insbesondere in der Regentonne, vorgesehen.

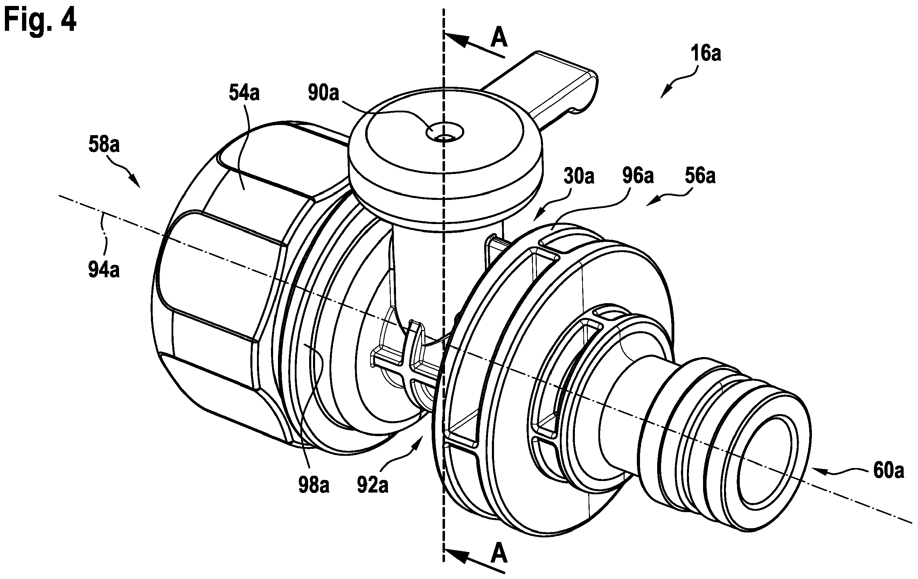

Vorzugsweise ist das Leitungselement 12a an einer von einer fluidtechnisch mit der Pumpeinheit 40a koppelbaren Einlassöffnung verschiedenen Auslassöffnung fluidtechnisch mit der Fluidflussunterbrechungsvorrichtung 16a koppelbar. Insbesondere ist das Leitungselement 12a dazu vorgesehen, der Fluidflussunterbrechungsvorrichtung 16a ein Fluid 14a zuzuleiten, wobei die Fluidflussunterbrechungsvorrichtung 16a in zumindest einem Betriebszustand dazu vorgesehen ist, das Fluid 14a weiterzuleiten. Vorzugsweise umfasst das Bewässerungssystem 10a zumindest eine Koppeleinheit 54a, die zu einer fluidtechnischen Kopplung des Leitungselements 12a mit der Fluidflussunterbrechungsvorrichtung 16a vorgesehen ist. Insbesondere kann die Koppeleinheit 54a als ein Dreh- und/oder Klemmverbinder, als ein Klickverbinder, als ein Schraubverbinder oder als eine andere, einem Fachmann als sinnvoll erscheinende Koppeleinheit ausgebildet sein. Bevorzugt umfasst die Fluidflussunterbrechungsvorrichtung 16a die Koppeleinheit 54a. Insbesondere kann die Koppeleinheit 54a an einer Gehäuseeinheit 56a der Fluidflussunterbrechungsvorrichtung 16a, insbesondere an einem Einlassbereich 58a der Gehäuseeinheit 56a, angeordnet sein und/oder zumindest teilweise von der Gehäuseeinheit 56a ausgebildet sein (vgl. Figur 4). Alternativ ist vorstellbar, dass das Leitungselement 12a fest, insbesondere stoffschlüssig, mit der Fluidflussunterbrechungsvorrichtung 16a verbunden ist.

Die Fluidflussunterbrechungsvorrichtung 16a weist zumindest einen von dem mit dem Leitungselement 12a koppelbaren Einlassbereich 58a verschiedenen Auslassbereich 60a auf, in dem eine Ausgabe eines Fluids 14a erfolgen kann. Der Auslassbereich 60a kann insbesondere als ein Kopplungsbereich, insbesondere als ein Adapterbereich, zu einer fluidtechnischen Kopplung, insbesondere einer lösbaren Kopplung, mit dem zumindest einen weiteren Leitungselement 46a ausgebildet sein. Insbesondere kann das Bewässerungssystem 10a das weitere Leitungselement 46a umfassen. Alternativ ist vorstellbar, dass das weitere Leitungselement 46a als ein externes Leitungselement ausgebildet, beispielsweise dem externen Bewässerungsgerät 48a zugeordnet, ist. In Abhängigkeit von einer Anordnung des Auslassbereichs 60a der Fluidflussunterbrechungsvorrichtung 16a und/oder einer Auslassöffnung des weiteren, mit der Fluidflussunterbrechungsvorrichtung 16a gekoppelten Leitungselements 46a kann insbesondere unabhängig von einer aktiven Beförderung, insbesondere nach einem Abschalten der Pumpeinheit 40a, ein Fluid 14a durch das Bewässerungssystem 10a, insbesondere durch das Leitungselement 12a, aus dem Fluidbehältnis 18a fließen, insbesondere aufgrund des Siphon-Effekts. Insbesondere kann das Fluid 14a aufgrund eines Höhenunterschieds zwischen dem Auslassbereich 60a der Fluidflussunterbrechungsvorrichtung 16a und/oder der Auslassöffnung des weiteren Leitungselements 46a und dem Fluidspiegel 50a, insbesondere in dem Fluidbehältnis 18a, durch das Bewässerungssystem 10a, insbesondere durch das Leitungselement 12a, fließen, insbesondere solange bis der Fluidspiegel 50a auf einer selben Höhe wie der Auslassbereich 60a der Fluidflussunterbrechungsvorrichtung 16a und/oder der Auslassöffnung des weiteren Leitungselements 46a angeordnet ist. Insbesondere kann in Abhängigkeit von einer Anordnung des Auslassbereichs 60a der Fluidflussunterbrechungsvorrichtung 16a und/oder der Auslassöffnung des weiteren Leitungselements 46a unterhalb eines minimalen Fluidspiegels 50a, insbesondere unterhalb eines Bodens 62a des Fluidbehältnisses 18a, sämtliches Fluid 14a aus dem Fluidbehältnis 18a herausfließen, insbesondere das Fluidbehältnis 18a leerlaufen. Im vorliegenden Ausführungsbeispiel ist das weitere Leitungselement 46a im Bereich der Auslassöffnung fluidtechnisch mit dem Bewässerungsgerät 48a gekoppelt, das unterhalb des Fluidspiegels 50a in dem Fluidbehältnis 18a angeordnet ist.

Bevorzugt umfasst das Bewässerungssystem 10a zumindest eine, insbesondere die vorgenannte, Pumpeinheit 40a, die dazu vorgesehen ist, ein Fluid 14a durch das Leitungselement 12a zu befördern, und zumindest eine Energieversorgungseinheit 42a, insbesondere einen Akkumulator, die/der zu einer netzunabhängigen Energieversorgung zumindest der Pumpeinheit 40a vorgesehen ist. Alternativ zu einer Ausbildung als ein Akkumulator ist denkbar, dass die Energieversorgungseinheit 42a als eine Batterie, als ein Speicherkondensator, als eine Solarzelle oder als eine andere, einem Fachmann als sinnvoll erscheinende Energieversorgungseinheit ausgebildet ist. Weiterhin alternativ oder zusätzlich ist denkbar, dass das Bewässerungssystem 10a zumindest eine netzgebundene Energieversorgungseinheit, insbesondere einen Netzanschluss, aufweist. Vorzugsweise umfasst das Bewässerungssystem 10a zumindest eine Halterungseinheit 64a, die dazu vorgesehen ist, die Energieversorgungseinheit 42a, insbesondere zu einer Befestigung außerhalb des Fluidbehältnisses 18a, beispielsweise an einer Hauswand, an einem Rand 32a des Fluidbehältnisses 18a, wie beispielhaft im vorliegenden Ausführungsbeispiel gezeigt, an einem Gartenzaun o. dgl., zu befestigen. Die Energieversorgungseinheit 42a ist vorzugsweise dazu vorgesehen, die Pumpeinheit 40a mit elektrischer Energie zu versorgen, insbesondere über ein elektrisches Leitungselement 66a, insbesondere über ein Kabel, des Bewässerungssystems 10a. Vorzugsweise ist das elektrische Leitungselement 66a wasserdicht ausgebildet. Insbesondere ist die Pumpeinheit 40a dazu vorgesehen, innerhalb des Fluidbehältnisses 18a, insbesondere an dem Boden 62a des Fluidbehältnisses 18a, angeordnet zu werden. Insbesondere verläuft das elektrische Leitungselement 66a zu einer Energieversorgung der Pumpeinheit 40a von außerhalb des Fluidbehältnisses 18a durch ein Fluid 14a bis zur Pumpeinheit 40a. Vorzugsweise ist das elektrische Leitungselement 66a elektrisch mit der Halterungseinheit 64a gekoppelt. Insbesondere weist die Halterungseinheit 64a elektrische Kontaktelemente zu einer elektrischen Kopplung mit der Energieversorgungseinheit 42a auf (hier nicht dargestellt). Alternativ ist denkbar, dass das elektrische Leitungselement 66a direkt mit der Energieversorgungseinheit 42a gekoppelt ist. Weiterhin ist vorstellbar, dass die Energieversorgungseinheit 42a wasserdicht ausgebildet ist und unterhalb des Fluidspiegels 50a direkt mit der Pumpeinheit 40a verbunden ist oder dass die Energieversorgungseinheit 42a in einer wasserdichten Aufnahme der Pumpeinheit 40a angeordnet ist.

Bevorzugt umfasst das Bewässerungssystem 10a zumindest eine Nutzerinteraktionseinheit 44a, die dazu eingerichtet ist, einem Nutzer Steuerungsfunktionen für die Pumpeinheit 40a, insbesondere zumindest eine Zeitschaltfunktion, bereitzustellen. Vorzugsweise ist die Nutzerinteraktionseinheit 44a in die Halterungseinheit 64a integriert und/oder an der Halterungseinheit 64a anordenbar. Alternativ oder zusätzlich ist vorstellbar, dass die Nutzerinteraktionseinheit 44a in die Energieversorgungseinheit 42a integriert und/oder an der Energieversorgungseinheit 42a anordenbar ist. Die Nutzerinteraktionseinheit 44a kann insbesondere als eine optische Nutzerinteraktionseinheit, als eine haptische Nutzerinteraktionseinheit und/oder als eine akustische Nutzerinteraktionseinheit ausgebildet sein. Eine optische Nutzerinteraktionseinheit 44a kann zu einer Interaktion mit einem Nutzer zumindest einen, insbesondere berührungsempfindlichen, Bildschirm 68a, zumindest eine Anzeige-Leuchtdiode 70a o. dgl. umfassen. Eine haptische Nutzerinteraktionseinheit 44a kann zu einer Nutzerinteraktion zumindest einen Schalter, zumindest einen Knopf 72a, zumindest ein Wahlrad o. dgl. umfassen. Eine akustische Nutzerinteraktionseinheit kann zu einer Nutzerinteraktion zumindest einen Lautsprecher zu einer Ausgabe von Hinweisen, zumindest ein Mikrofon zu einer Spracheingabe o. dgl. umfassen. Im vorliegenden Ausführungsbeispiel ist die Nutzerinteraktionseinheit 44a beispielhaft als eine kombinierte optische und haptische Nutzerinteraktionseinheit ausgebildet.

Vorzugsweise ist die Pumpeinheit 40a mittels der Nutzerinteraktionseinheit 44a steuerbar. Insbesondere ist die Nutzerinteraktionseinheit 44a zu einer Übertragung von Steuerbefehlen an die Pumpeinheit 40a über das elektrische Leitungselement 66a und/oder drahtlos, beispielsweise über WLAN, Bluetooth, Funk o. dgl., mit der Pumpeinheit 40a verbunden. Vorzugsweise kann ein Nutzer an der Nutzerinteraktionseinheit 44a die Pumpeinheit 40a aktivieren und deaktivieren, ein Pumpvolumen einstellen, Bewässerungsprogramme auswählen o. dgl. Bevorzugt kann der Nutzer an der Nutzerinteraktionseinheit 44a zumindest eine Zeitschaltfunktion einstellen, beispielsweise einen Zeitpunkt, zu dem die Pumpeinheit 40a automatisch einen Pumpbetrieb beginnt, einen Zeitpunkt, zu dem die Pumpeinheit 40a automatisch einen Pumpbetrieb beendet, einen Zeitraum, in dem die Pumpeinheit 40a automatisch ein Fluid 14a befördert oder eine andere, einem Fachmann als sinnvoll erscheinende Zeitschaltfunktion. Vorzugsweise kann die Nutzerinteraktionseinheit 44a zumindest eine Überwachungsfunktion zu einer Überwachung der Pumpeinheit 40a und/oder der Energieversorgungseinheit 42a aufweisen. Vorzugsweise kann die Nutzerinteraktionseinheit 44a zumindest teilweise als eine, insbesondere drahtlose, Kommunikationseinheit ausgebildet sein oder zumindest eine, insbesondere drahtlose, Kommunikationseinheit umfassen (hier nicht weiter dargestellt). Die Kommunikationseinheit kann insbesondere als ein WLAN-Modul, als ein Bluetooth-Modul, als ein NFC-Modul, als ein Funkmodul oder als ein anderes, einem Fachmann als sinnvoll erscheinendes Modul ausgebildet sein. Insbesondere ist denkbar, dass mittels einer externen Einheit Steuerbefehle an die Kommunikationseinheit übertragbar sind, die die Kommunikationseinheit insbesondere zu einer Steuerung der Pumpeinheit 40a an die Pumpeinheit 40a überträgt. Die externe Einheit kann insbesondere als ein Mobiltelefon, als ein Computer, als ein Server, als ein Heimautomatisierungssystem oder als eine andere, einem Fachmann als sinnvoll erscheinende externe Einheit ausgebildet sein (hier nicht dargestellt).

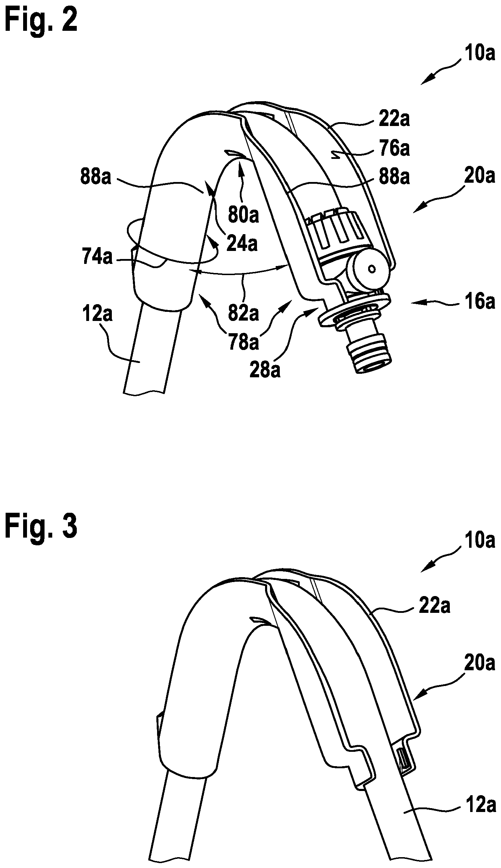

Figur 2 zeigt einen Teil des Bewässerungssystems 10a aus Figur 1 in einer schematischen perspektivischen Darstellung. Bevorzugt umfasst das Bewässerungssystem 10a zumindest eine Befestigungsvorrichtung 20a, die zu einer Aufnahme des Leitungselements 12a und/oder der Fluidflussunterbrechungsvorrichtung 16a zumindest ein Führungselement 22a aufweist, und die zumindest einen Befestigungsbereich 24a, insbesondere eine Anlagefläche, aufweist, der/die dazu vorgesehen ist, die Fluidflussunterbrechungsvorrichtung 16a, insbesondere werkzeuglos, an dem Fluidbehältnis 18a, insbesondere an einer Oberkante 26a des Fluidbehältnisses 18a, zu befestigen. Insbesondere sind in Figur 2 ein Teil des Leitungselements 12a und die Fluidflussunterbrechungsvorrichtung 16a in einem an der Befestigungsvorrichtung 20a aufgenommenen Zustand dargestellt. Die Befestigungsvorrichtung 20a, insbesondere das Führungselement 22a, ist vorzugsweise zu einer Aufnahme des Leitungselements 12a und der Fluidflussunterbrechungsvorrichtung 16a vorgesehen. Vorzugsweise kann das Führungselement 22a das Leitungselement 12a auch unabhängig von der Fluidflussunterbrechungsvorrichtung 16a aufnehmen, insbesondere führen (vgl. Figur 3). Vorzugsweise ist das Führungselement 22a rohrartig ausgebildet. Insbesondere ist das Führungselement 22a als ein in Umfangsrichtung 74a teilgeöffnetes Rohr, insbesondere als eine Rohrhälfte, ausgebildet. Insbesondere weist das Führungselement 22a einen U-förmigen Querschnitt auf. Alternativ ist vorstellbar, dass das Führungselement 22a als ein in Umfangsrichtung 74a geschlossenes Rohr, insbesondere mit einem O-förmigen Querschnitt, ausgebildet ist. Insbesondere weist das Führungselement 22a einen nichtlinearen Verlauf auf, ist insbesondere gebogen ausgebildet. Vorzugsweise ist das Führungselement 22a zu einer losen Aufnahme und/oder einer mittelbaren Fixierung des Leitungselements 12a vorgesehen. Insbesondere kann die Fluidflussunterbrechungsvorrichtung 16a an der Befestigungsvorrichtung 20a, insbesondere an dem Führungselement 22a, fixiert sein und kann das Leitungselement 12a an der Fluidflussunterbrechungsvorrichtung 16a fixiert sein. Das Führungselement 22a ist vorzugsweise aus einem Kunststoff, aus einem Verbundwerkstoff, aus einem Metall oder aus einem anderen, einem Fachmann als sinnvoll erscheinenden Werkstoff ausgebildet.

Der Befestigungsbereich 24a, insbesondere die Anlagefläche, ist vorzugsweise zumindest teilweise, insbesondere vollständig, von dem Führungselement 22a ausgebildet. Alternativ ist vorstellbar, dass der Befestigungsbereich 24a getrennt von dem Führungselement 22a, insbesondere von einem separaten Bauteil der Befestigungsvorrichtung 20a, ausgebildet ist. Vorzugsweise weist das Führungselement 22a eine Innenfläche 76a auf, an der das Leitungselement 12a und/oder die Fluidflussunterbrechungsvorrichtung 16a anliegen/anliegt. Vorzugsweise ist der Befestigungsbereich 24a, insbesondere die Anlagefläche, als eine Außenfläche des Führungselements 22a ausgebildet, die auf einer der Innenfläche 76a des Führungselements 22a abgewandten Seite des Führungselements 22a angeordnet ist. Vorzugsweise ist die Befestigungsvorrichtung 20a dazu vorgesehen, mit dem Befestigungsbereich 24a zu einer Befestigung der aufgenommenen Fluidflussunterbrechungsvorrichtung 16a an dem Fluidbehältnis 18a an dem Fluidbehältnis 18a, insbesondere an der Oberkante 26a des Fluidbehältnisses 18a, anzuliegen, insbesondere aufzuliegen (vgl. Figur 1). Insbesondere ist die Befestigungsvorrichtung 20a dazu vorgesehen, die Oberkante 26a, insbesondere einen oberen Rand 32a, des Fluidbehältnisses 18a zumindest abschnittsweise zu umgreifen. Insbesondere ist die Befestigungsvorrichtung 20a dazu vorgesehen, durch eine Auflagekraft und/oder durch ein zumindest abschnittsweises Umgreifen der Oberkante 26a des Fluidbehältnisses 18a an dem Fluidbehältnis 18a zu halten. Insbesondere ist die Befestigungsvorrichtung 20a frei von Werkzeug, insbesondere frei von zusätzlichen Befestigungsmitteln, wie beispielsweise Schrauben, Klemmen, Nägeln o. dgl., an dem Fluidbehältnis 18a anbringbar. Vorzugsweise ist die Befestigungsvorrichtung 20a dazu vorgesehen, die Fluidflussunterbrechungsvorrichtung 16a oberhalb von dem Fluidspiegel 50a in dem Fluidbehältnis 18a an dem Fluidbehältnis 18a zu befestigen.

Bevorzugt weist die Befestigungsvorrichtung 20a zumindest eine Fixiereinheit 28a zu einer, insbesondere werkzeuglosen, Fixierung der Fluidflussunterbrechungsvorrichtung 16a auf. Die Fixiereinheit 28a ist vorzugsweise zu einer Fixierung der Fluidflussunterbrechungsvorrichtung 16a in einer definierten Position relativ zu dem aufgenommenen Leitungselement 12a vorgesehen. Insbesondere ist die Fixiereinheit 28a zumindest teilweise, bevorzugt vollständig, von dem Führungselement 22a ausgebildet. Vorzugsweise ist die Fixiereinheit 28a einteilig mit dem Führungselement 22a ausgebildet. Insbesondere bildet die Fixiereinheit 28a einen, in einem an einem Fluidbehältnis 18a befestigten Zustand insbesondere außerhalb des Fluidbehältnisses 18a angeordneten, Endbereich des Führungselements 22a aus. Insbesondere ist die Fixiereinheit 28a als eine zumindest abschnittsweise Verengung des Führungselements 22a, insbesondere in dem Endbereich, ausgebildet. Alternativ ist vorstellbar, dass die Fixiereinheit 28a als eine von dem Führungselement 22a separate, insbesondere kraft- und/oder formschlüssig mit dem Führungselement 22a verbundene, Einheit ausgebildet ist. Insbesondere ist die Fixiereinheit 28a dazu vorgesehen, in einem demontierten Zustand der Fluidflussunterbrechungsvorrichtung 16a das Leitungselement 12a zu führen. Vorzugsweise ist die Fixiereinheit 28a zu einer Fixierung der Fluidflussunterbrechungsvorrichtung 16a frei von zusätzlichen Befestigungselementen, wie Schrauben, Bolzen, Haken o. dgl., und/oder Werkzeugen, wie Schraubendrehern, Zangen, Schraubenschlüssel o. dgl., vorgesehen.

Bevorzugt ist der Befestigungsbereich 24a abgewinkelt, insbesondere U-förmig, ausgebildet. Insbesondere ist die komplette Befestigungsvorrichtung 20a, insbesondere das Führungselement 22a, abgewinkelt, insbesondere U-förmig, ausgebildet. Alternativ ist denkbar, dass der Befestigungsbereich 24a halbkreisförmig, V-förmig, L-förmig oder auf eine andere, einem Fachmann als sinnvoll erscheinende Weise abgewinkelt ausgebildet ist. Insbesondere weist der Befestigungsbereich 24a zumindest zwei winklig, insbesondere unter einem Winkel 82a von kleiner als 180° und größer als 0°, zueinander ausgerichtete Teilbereiche 78a auf. Vorzugsweise sind die Teilbereiche 78a über einen abgerundeten, insbesondere kurvenförmigen, Mittelbereich 80a des Befestigungsbereichs 24a miteinander verbunden. Insbesondere ist der Befestigungsbereich 24a frei von harten Kanten ausgebildet.

Bevorzugt ist die Befestigungsvorrichtung 20a mittels des Befestigungsbereichs 24a an einem, insbesondere dem vorgenannten, Rand 32a, insbesondere an einer, insbesondere der vorgenannten, Oberkante 26a, des Fluidbehältnisses 18a einhakbar (vgl. Figur 1). Insbesondere ist der Befestigungsbereich 24a hakenartig ausgebildet. Vorzugsweise ist die Befestigungsvorrichtung 20a dazu vorgesehen, insbesondere unter einem Gewicht des aufgenommenen Leitungselements 12a und/oder der aufgenommenen Fluidflussunterbrechungsvorrichtung 16a, an dem Mittelbereich 80a des Befestigungsbereichs 24a auf dem Rand 32a, insbesondere auf der Oberkante 26a, des Fluidbehältnisses 18a aufzuliegen. Insbesondere ist die Befestigungsvorrichtung 20a dazu vorgesehen, mittels der Teilbereiche 78a des Befestigungsbereichs 24a den Rand 32a, insbesondere die Oberkante 26a, des Fluidbehältnisses 18a, insbesondere beidseitig, zu umgreifen, insbesondere zu umhaken. Insbesondere sind die Teilbereiche 78a dazu vorgesehen, eine Kippbewegung der Befestigungsvorrichtung 20a in einem an dem Rand 32a, insbesondere an der Oberkante 26a, des Fluidbehältnisses 18a angeordneten Zustand zumindest teilweise zu unterbinden. Insbesondere sind die Teilbereiche 78a unter einem Winkel 82a von zumindest 15°, bevorzugt unter einem Winkel 82a von zumindest 30° und besonders bevorzugt unter einem Winkel 82a von zumindest 45° relativ zueinander ausgerichtet, insbesondere zu einer Verwendung mit unterschiedlichen Fluidbehältnissen 18a, die unterschiedlich breite Ränder 32a, insbesondere Oberkanten 26a, aufweisen. Alternativ ist vorstellbar, dass eine Winkelausrichtung der Teilbereiche 78a relativ zueinander einstellbar ist, insbesondere in Abhängigkeit von der Breite des Rands 32a, insbesondere der Oberkante 26a, des Fluidbehältnisses 18a. Insbesondere kann die Befestigungsvorrichtung 20a zu einer Realisierung einer Einstellbarkeit zumindest in dem Befestigungsbereich 24a in einem alternativen Ausführungsbeispiel zumindest teilweise elastisch ausgebildet sein, eine Winkelverstelleinheit aufweisen o. dgl. Die Befestigungsvorrichtung 20a kann zumindest in dem Befestigungsbereich 24a zumindest eine haftverstärkende Beschichtung, Oberflächenbehandlung o. dgl. aufweisen, insbesondere zu einer Verbesserung einer Haltekraft an dem Rand 32a, insbesondere an der Oberkante 26a, des Fluidbehältnisses 18a. Im vorliegenden Ausführungsbeispiel weist ein Deckel 84a des Fluidbehältnisses 18a beispielhaft Ausnehmungen 86a auf, die eine Anordnung der Befestigungsvorrichtung 20a und der Halterungseinheit 64a an dem Rand 32a des Fluidbehältnisses 18a in einem geschlossenen Zustand des Fluidbehältnisses 18a ermöglichen (vgl. Figur 1).

Bevorzugt ist das Führungselement 22a gebogen, insbesondere U-förmig, ausgebildet und dazu vorgesehen, das Leitungselement 12a, insbesondere in einem an einem, insbesondere an dem vorgenannten, Rand 32a des Fluidbehältnisses 18a befestigten Zustand, zumindest im Wesentlichen knickfrei aufzunehmen. Vorzugsweise ist das Führungselement 22a analog zu dem Befestigungsbereich 24a gebogen, insbesondere U-förmig, ausgebildet. Insbesondere weist das Führungselement 22a einen gleichen Krümmungsradius wie der Befestigungsbereich 24a auf. Insbesondere bildet das Führungselement 22a den Befestigungsbereich 24a aus. Alternativ ist vorstellbar, dass das Führungselement 22a und der Befestigungsbereich 24a unterschiedlich gebogen und/oder abgewinkelt ausgebildet sind. Insbesondere ist das Führungselement 22a dazu vorgesehen, das aufgenommene Leitungselement 12a entlang einer Kurve zu führen. Insbesondere folgt das von dem Führungselement 22a aufgenommene Leitungselement 12a einer gebogenen Kontur des Führungselements 22a. Vorzugsweise weist das Führungselement 22a einen derartigen Krümmungsradius, insbesondere einen Winkel 82a zwischen zumindest zwei Schenkeln 88a des Führungselements 22a, die insbesondere die Teilbereiche 78a des Befestigungsbereichs 24a ausbilden, auf, dass das Leitungselement 12a knickfrei aufnehmbar ist. Insbesondere sind die Schenkel 88a unter einem Winkel 82a von zumindest 15°, bevorzugt unter einem Winkel 82a von zumindest 30° und besonders bevorzugt unter einem Winkel 82a von zumindest 45° relativ zueinander ausgerichtet. Insbesondere sind die Schenkel 88a unter einem Winkel 82a von höchstens 120°, bevorzugt von höchstens 90° und besonders bevorzugt von höchstens 60° relativ zueinander ausgerichtet. Alternativ ist vorstellbar, dass eine Winkelausrichtung der Schenkel 88a relativ zueinander einstellbar ist, insbesondere in Abhängigkeit von einer Art, insbesondere eines Durchmessers, eines aufgenommenen Leitungselements 12a.

Figur 3 zeigt den Teil des Bewässerungssystems 10a aus Figur 2 ohne die Fluidflussunterbrechungsvorrichtung 16a in einer schematischen perspektivischen Darstellung. Insbesondere ist das Leitungselement 12a vollständig durch das Führungselement 22a führbar. Insbesondere kann in Abhängigkeit von einer Verwendung des Bewässerungssystems 10a frei von der Fluidflussunterbrechungsvorrichtung 16a auf das weitere Leitungselement 46a verzichtet werden.

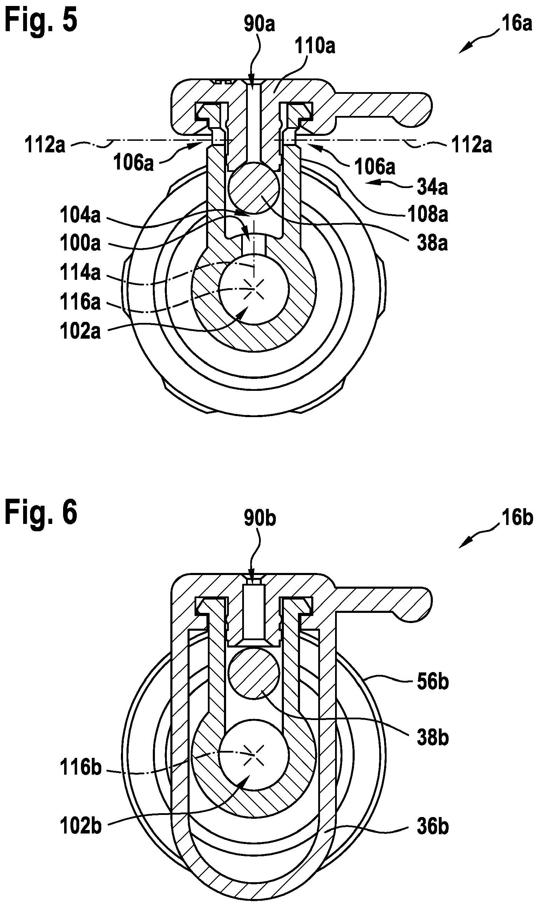

Figur 4 zeigt die Fluidflussunterbrechungsvorrichtung 16a des Bewässerungssystems 10a aus Figur 1 in einer schematischen perspektivischen Darstellung. Die Fluidflussunterbrechungsvorrichtung 16a ist vorzugsweise dazu vorgesehen, den Siphon-Effekt zumindest teilautomatisch zu stoppen, insbesondere zu einer Verhinderung eines Leerlaufens des Fluidbehältnisses 18a. Insbesondere ist die Fluidflussunterbrechungsvorrichtung 16a verschieden von einer manuell betätigbaren Fluidflussunterbrechungsvorrichtung, insbesondere von einem Drehventil, ausgebildet. Insbesondere ist die Fluidflussunterbrechungsvorrichtung 16a verschieden von einer automatisch elektrisch, magnetisch und/oder mechanisch betätigbaren Fluidflussunterbrechungsvorrichtung ausgebildet. Bevorzugt ist die Fluidflussunterbrechungsvorrichtung 16a als eine, insbesondere automatisch, druckabhängig, insbesondere differenzdruckabhängig, betätigbare Fluidflussunterbrechungsvorrichtung ausgebildet. Insbesondere ist die Fluidflussunterbrechungsvorrichtung 16a als ein druckgesteuertes Ventil, insbesondere als ein Sicherheitsventil, ausgebildet. Vorzugsweise weist die Fluidflussunterbrechungsvorrichtung 16a zumindest zwei Betriebszustände auf, wobei die Fluidflussunterbrechungsvorrichtung 16a in einem ersten Betriebszustand dazu vorgesehen ist, einen Fluidfluss zu erlauben und in einem zweiten Betriebszustand dazu vorgesehen ist, einen Fluidfluss zu unterbrechen. Insbesondere ist die Fluidflussunterbrechungsvorrichtung 16a dazu vorgesehen, in Abhängigkeit von einer aktiven Beförderung eines Fluids 14a durch das Bewässerungssystem 10a, insbesondere mittels der Pumpeinheit 40a, einen Fluidfluss zu erlauben. Insbesondere ist die Fluidflussunterbrechungsvorrichtung 16a dazu vorgesehen, in Abhängigkeit von einem passiven Fluidfluss durch das Bewässerungssystem 10a, insbesondere in Abhängigkeit von einer deaktivierten Pumpeinheit 40a, den Fluidfluss zu unterbrechen. Insbesondere erzeugt eine aktive Beförderung eines Fluids 14a, insbesondere die aktivierte Pumpeinheit 40a, einen Druck, insbesondere einen Fluiddruck, in der Fluidflussunterbrechungsvorrichtung 16a, der höher ist als ein Umgebungsdruck, insbesondere ein Umgebungsluftdruck, der Fluidflussunterbrechungsvorrichtung 16a. Insbesondere schließt zumindest ein Wirkelement 38a der Fluidflussunterbrechungsvorrichtung 16a in Abhängigkeit von einem Überdruck in der Fluidflussunterbrechungsvorrichtung 16a, insbesondere automatisch, zumindest eine Ventilöffnung 90a der Fluidflussunterbrechungsvorrichtung 16a, was insbesondere einen Fluidfluss durch das Bewässerungssystem 10a, insbesondere durch die Fluidflussunterbrechungsvorrichtung 16a, erlaubt (vgl. Figur 5). Insbesondere gleicht sich ein Druck, insbesondere ein Fluiddruck, in der Fluidflussunterbrechungsvorrichtung 16a in Abhängigkeit von einem passiven Fluidfluss, insbesondere in Abhängigkeit von einer deaktivierten Pumpeinheit 40a, an einen Umgebungsdruck, insbesondere an einen Umgebungsluftdruck, der Fluidflussunterbrechungsvorrichtung 16a an. Insbesondere öffnet das Wirkelement 38a in Abwesenheit eines Überdrucks in der Fluidflussunterbrechungsvorrichtung 16a, insbesondere automatisch, die Ventilöffnung 90a der Fluidflussunterbrechungsvorrichtung 16a. Insbesondere kann in Abhängigkeit von einer geöffneten Ventilöffnung 90a Umgebungsluft in die Fluidflussunterbrechungsvorrichtung 16a einströmen, was insbesondere den Siphon-Effekt stoppt und insbesondere einen Fluidfluss unterbricht.

Bevorzugt weist die Fluidflussunterbrechungsvorrichtung 16a zumindest eine mit der Fixiereinheit 28a der Befestigungsvorrichtung 20a zusammenwirkende Gegenfixiereinheit 30a zu einer, insbesondere lösbaren, Kopplung mit der Befestigungsvorrichtung 20a auf. Insbesondere ist die Gegenfixiereinheit 30a zumindest teilweise, bevorzugt vollständig, von der Gehäuseeinheit 56a der Fluidflussunterbrechungsvorrichtung 16a ausgebildet. Vorzugsweise ist die Gegenfixiereinheit 30a einteilig mit der Gehäuseeinheit 56a ausgebildet. Insbesondere ist die Gegenfixiereinheit 30a durch eine Formgebung der Gehäuseeinheit 56a gebildet. Insbesondere ist die Gegenfixiereinheit 30a zumindest teilweise von einem Verengungsbereich 92a der Gehäuseeinheit 56a gebildet, der in einem montierten Zustand zumindest teilweise von der Fixiereinheit 28a, insbesondere von der zumindest abschnittsweisen Verengung des Führungselements 22a, umschlossen ist. Vorzugsweise weist die Gehäuseeinheit 56a in dem Verengungsbereich 92a einen maximalen Durchmesser auf, der maximal einem maximalen Durchmesser der zumindest abschnittsweisen Verengung des Führungselements 22a entspricht. Vorzugsweise ist die Gegenfixiereinheit 30a zumindest teilweise von zumindest zwei, entlang einer Längsachse 94a der Gehäuseeinheit 56a betrachtet vor und hinter dem Verengungsbereich 92a angeordneten Gegenfixierelementen 96a, 98a der Gehäuseeinheit 56a gebildet. Die Gegenfixierelemente 96a, 98a weisen vorzugsweise einen größeren maximalen Durchmesser auf als die zumindest abschnittsweise Verengung des Führungselements 22a. Insbesondere sind die Gegenfixierelemente 96a, 98a dazu vorgesehen, eine Verschiebung der Fluidflussunterbrechungsvorrichtung 16a an dem Führungselement 22a entlang der Längsachse 94a der Fluidflussunterbrechungsvorrichtung 16a zu unterbinden. Vorzugsweise ist zumindest eines der Gegenfixierelemente 98a zumindest teilweise von dem Einlassbereich 58a der Gehäuseeinheit 56a gebildet. Vorzugsweise ist die Ventilöffnung 90a der Fluidflussunterbrechungsvorrichtung 16a an dem Verengungsbereich 92a angeordnet. Alternativ ist vorstellbar, dass die Gegenfixiereinheit 30a als eine von der Gehäuseeinheit 56a separate, insbesondere kraft- und/oder formschlüssig mit der Gehäuseeinheit 56a verbundene, Einheit ausgebildet ist.

Weiterhin wird vorgeschlagen, dass die Fixiereinheit 28a und/oder die Gegenfixiereinheit 30a als Klickverbinder ausgebildet sind/ist. Vorzugsweise sind die Fixiereinheit 28a und die Gegenfixiereinheit 30a als Klickverbinder ausgebildet. Insbesondere ist die Gegenfixiereinheit 30a, insbesondere werkzeuglos, in die Fixiereinheit 28a einklickbar und aus der Fixiereinheit 28a ausklickbar. Insbesondere ist die Gegenfixiereinheit 30a in der Fixiereinheit 28a festklemmbar, mit der Fixiereinheit 28a verrastbar o. dgl. Insbesondere kann die Fixiereinheit 28a zumindest ein Rastelement, insbesondere eine Rastnase, eine Rastkante, einen Rastvorsprung o. dgl., aufweisen, das zu einer Verrastung mit zumindest einem Gegenrastelement der Gegenfixiereinheit 30a vorgesehen ist (hier nicht dargestellt). Vorzugsweise ist eine Kopplung zwischen der Fixiereinheit 28a und der Gegenfixiereinheit 30a werkzeuglos lösbar, insbesondere durch eine zumindest abschnittsweise Federelastizität der Fixiereinheit 28a und/oder der Gegenfixiereinheit 30a. Alternativ oder zusätzlich ist denkbar, dass die Fixiereinheit 28a und/oder die Gegenfixiereinheit 30a zumindest ein Entriegelungselement zu einer Lösung einer Kopplung aufweisen/aufweist.

Figur 5 zeigt eine Schnittansicht der Fluidflussunterbrechungsvorrichtung 16a aus Figur 4 entlang einer in Figur 4 gekennzeichneten Linie A-A in einer schematischen Darstellung. Bevorzugt ist die Fluidflussunterbrechungsvorrichtung 16a als ein Sicherheitsventil, insbesondere als ein Kugelventil, ausgebildet. Insbesondere ist das Wirkelement 38a der Fluidflussunterbrechungsvorrichtung 16a als eine Ventilkugel ausgebildet. Alternativ ist vorstellbar, dass die Fluidflussunterbrechungsvorrichtung 16a als ein Entenschnabelventil, als ein Prallventil, als ein Rückschlagventil, als ein Ventil mit Belüftungsschlauch, als ein Rückflussverhinderer oder als eine andere, einem Fachmann als sinnvoll erscheinende Fluidflussunterbrechungsvorrichtung ausgebildet ist. Vorzugsweise ist die Fluidflussunterbrechungsvorrichtung 16a als ein differenzdruckabhängiges Ventil ausgebildet. Zusätzlich ist denkbar, dass die Fluidflussunterbrechungsvorrichtung 16a zumindest ein Rückstellelement, insbesondere eine Druckfeder, zu einer Druckbeaufschlagung des Wirkelements 38a aufweist.

Bevorzugt weist die Fluidflussunterbrechungsvorrichtung 16a zumindest eine Überdruckentlastungseinheit 34a auf, die dazu vorgesehen ist, in Abhängigkeit von einem überstiegenen Grenzdruck in der Fluidflussunterbrechungsvorrichtung 16a ein Fluid 14a austreten zu lassen. Insbesondere kann ein Druck, insbesondere ein Fluiddruck, in der Fluidflussunterbrechungsvorrichtung 16a einen Normalbetriebsdruck in der Fluidflussunterbrechungsvorrichtung 16a in Abhängigkeit von einer Fehlfunktion der Fluidflussunterbrechungsvorrichtung 16a und/oder der Pumpeinheit 40a, in Abhängigkeit von einer Verstopfung des Leitungselements 12a und/oder des weiteren Leitungselements 46a, o. dgl. überschreiten. Vorzugsweise ist die Fluidflussunterbrechungsvorrichtung 16a dazu vorgesehen, einem Druck kleiner als der Grenzdruck standzuhalten. Der Grenzdruck kann beispielsweise einen Wert von vier Bar aufweisen. Die Überdruckentlastungseinheit 34a ist vorzugsweise dazu vorgesehen, einen Druck in der Fluidflussunterbrechungsvorrichtung 16a, insbesondere durch ein Austretenlassen von einem Fluid 14a aus der Fluidflussunterbrechungsvorrichtung 16a, unter den Grenzdruck zu senken.

Vorzugsweise umfasst die Überdruckentlastungseinheit 34a zumindest eine Druckentlastungsöffnung 100a in einem Fluidkanal 102a der Fluidflussunterbrechungsvorrichtung 16a, durch den ein Fluid 14a strömen kann. Vorzugsweise verbindet die Druckentlastungsöffnung 100a den Fluidkanal 102a fluidtechnisch mit einem Wirkelementbereich 104a der Fluidflussunterbrechungsvorrichtung 16a, in dem das Wirkelement 38a angeordnet ist. Vorzugsweise weist die Überdruckentlastungseinheit 34a zumindest eine weitere Druckentlastungsöffnung 106a in einer Seitenwandung 108a des Wirkelementbereichs 104a auf. Vorzugsweise kann ein Fluid 14a in einer Überdrucksituation aus dem Fluidkanal 102a durch die Druckentlastungsöffnung 100a in den Wirkelementbereich 104a und an dem Wirkelement 38a vorbei durch die zumindest eine weitere Druckentlastungsöffnung 106a aus der Fluidflussunterbrechungsvorrichtung 16a fließen. Vorzugsweise weist die Überdruckentlastungseinheit 34a zumindest zwei weitere Druckentlastungsöffnungen 106a auf, die insbesondere auf voneinander abgewandten Seiten eines Ventilöffnungseinsatzes 110a der Fluidflussunterbrechungsvorrichtung 16a angeordnet sind. Vorzugsweise erstrecken sich Längsachsen 112a der weiteren Druckentlastungsöffnungen 106a quer, insbesondere zumindest im Wesentlichen senkrecht, zu einer Längsachse 114a der Druckentlastungsöffnung 100a. Vorzugsweise weisen die weiteren Druckentlastungsöffnungen 106a eine kombinierte Querschnittsöffnungsfläche auf, die einer Querschnittöffnungsfläche der Druckentlastungsöffnung 100a entspricht. Alternativ ist vorstellbar, dass die Querschnittsöffnungsfläche jeder weiteren Druckentlastungsöffnung 106a der Querschnittsöffnungsfläche der Druckentlastungsöffnung 100a entspricht.

In den Figuren 6 bis 12 sind sieben weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 12 ist der Buchstabe a durch die Buchstaben b bis h ersetzt.

Figur 6 zeigt eine Schnittansicht einer ersten alternativen Fluidflussunterbrechungsvorrichtung 16b in einer schematischen Darstellung. Die Fluidflussunterbrechungsvorrichtung 16b ist insbesondere frei von einer Überdruckentlastungseinheit ausgebildet. Bevorzugt umfasst die Fluidflussunterbrechungsvorrichtung 16b zumindest eine Abschirmeinheit 36b, die dazu vorgesehen ist, zumindest ein Wirkelement 38b, insbesondere eine Kugel, der Fluidflussunterbrechungsvorrichtung 16b einzukapseln, insbesondere in einer Überdrucksituation. Vorzugsweise ist die Abschirmeinheit 36b dazu vorgesehen, ein Austreten des, insbesondere durch einen überstiegenen Grenzdruck beschleunigten, Wirkelements 38b aus einer Gehäuseeinheit 56b der Fluidflussunterbrechungsvorrichtung 16b zu unterbinden. Insbesondere ist die Abschirmeinheit 36b dazu vorgesehen, das Wirkelement 38b, insbesondere kapselartig, zu umschließen. Vorzugsweise umschließt die Abschirmeinheit 36b das Wirkelement 38b entlang von sämtlichen sich zumindest im Wesentlichen senkrecht zu einer Längsachse 116b eines Fluidkanals 102b der Fluidflussunterbrechungsvorrichtung 16b erstreckenden Raumrichtungen. Insbesondere ist die Abschirmeinheit 36b zumindest abschnittsweise innerhalb der Gehäuseeinheit 56b angeordnet. Die Abschirmeinheit 36b kann zu einer Aufnahme einer kinetischen Energie des Wirkelements 38b flexibel, beispielsweise als ein Gummiband, wie beispielhaft im vorliegenden Ausführungsbeispiel, als ein Gurt, als eine Lasche o. dgl., ausgebildet sein.

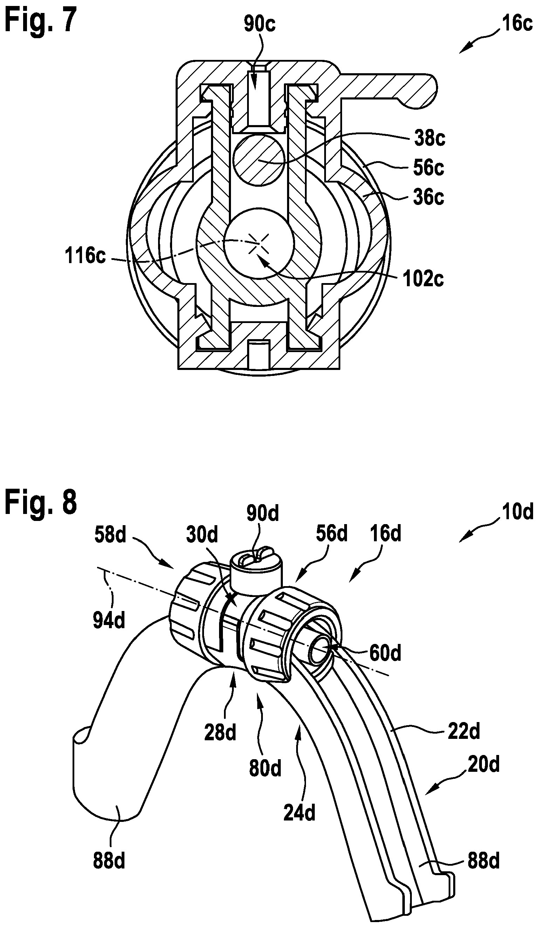

Figur 7 zeigt eine Schnittansicht einer zweiten alternativen Fluidflussunterbrechungsvorrichtung 16c in einer schematischen Darstellung. Die Fluidflussunterbrechungsvorrichtung 16c umfasst eine Abschirmeinheit 36c. Die Abschirmeinheit 36c ist massiv, beispielsweise aus einem hochfesten Kunststoff oder Verbundwerkstoff, aus einem Stahl o. dgl., ausgebildet, insbesondere als eine Verstärkung einer Gehäuseeinheit 56c der Fluidflussunterbrechungsvorrichtung 16c ausgebildet.

Figur 8 zeigt einen Teil eines dritten alternativen Bewässerungssystems 10d in einer schematischen perspektivischen Darstellung. Dargestellt sind insbesondere eine Fluidflussunterbrechungsvorrichtung 16d und eine Befestigungsvorrichtung 20d des Bewässerungssystems 10d. Ein Leitungselement des Bewässerungssystems 10d ist der Übersichtlichkeit halber nicht dargestellt. Insbesondere ist eine Fixiereinheit 28d der Befestigungsvorrichtung 20d zwischen zwei Schenkeln 88d eines Führungselements 22d der Befestigungsvorrichtung 20d, insbesondere auf einer Höhe eines Mittelbereichs 80d eines Befestigungsbereichs 24d der Befestigungsvorrichtung 20d, angeordnet. Die Fluidflussunterbrechungsvorrichtung 16d ist insbesondere in einem mittels der Fixiereinheit 28d fixierten Zustand dargestellt. Vorzugsweise ist die Fluidflussunterbrechungsvorrichtung 16d als ein Sicherheitsventil, insbesondere als ein Kugelventil, ausgebildet. Ein Auslassbereich 60d und ein Einlassbereich 58d der Fluidflussunterbrechungsvorrichtung 16d sind insbesondere analog zueinander ausgebildet. Insbesondere sind der Einlassbereich 58d und der Auslassbereich 60d entlang einer Längsachse 94d der Fluidflussunterbrechungsvorrichtung 16d beabstandet voneinander, insbesondere symmetrisch um eine Ventilöffnung 90d der Fluidflussunterbrechungsvorrichtung 16d, angeordnet.

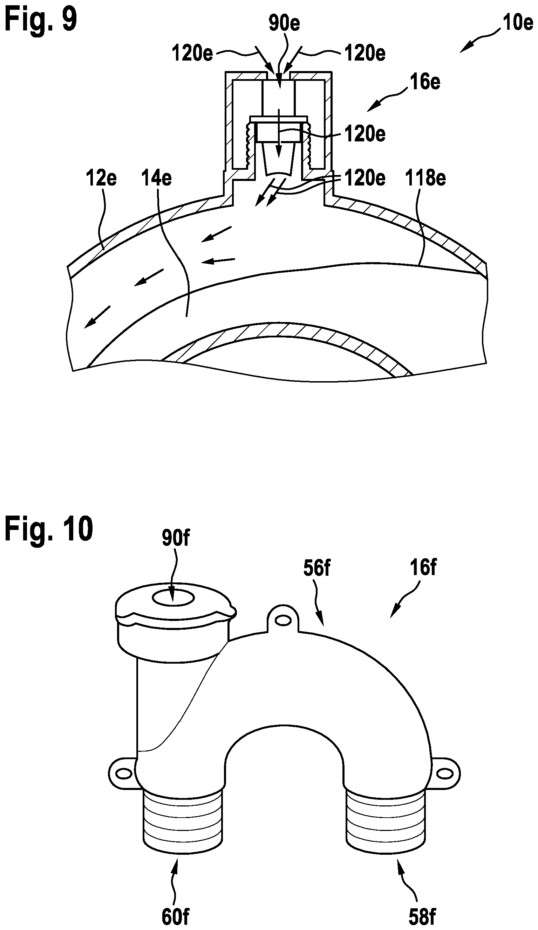

Figur 9 zeigt eine Schnittansicht eines Teils eines vierten alternativen Bewässerungssystems 10e in einer schematischen perspektivischen Darstellung. Dargestellt sind insbesondere eine Fluidflussunterbrechungsvorrichtung 16e und ein Leitungselement 12e des Bewässerungssystems 10e. Eine Befestigungsvorrichtung des Bewässerungssystems 10e ist der Übersichtlichkeit halber nicht dargestellt. Die Fluidflussunterbrechungsvorrichtung 16e ist insbesondere als ein Entenschnabelventil ausgebildet. In Figur 9 ist insbesondere ein Betriebszustand der Fluidflussunterbrechungsvorrichtung 16e dargestellt, in dem die Fluidflussunterbrechungsvorrichtung 16e einen Fluidfluss, insbesondere einen Siphon-Effekt, unterbricht, insbesondere durch ein Einströmenlassen von Umgebungsluft in das Leitungselement 12e. Insbesondere fällt ein Fluidpegel 118e in dem Leitungselement 12e. Eine Strömungsrichtung der einströmenden Umgebungsluft ist durch Pfeile 120e markiert.

Figur 10 zeigt eine fünfte alternative Fluidflussunterbrechungsvorrichtung 16f in einer schematischen perspektivischen Darstellung. Die Fluidflussunterbrechungsvorrichtung 16f ist insbesondere als ein Prallventil ausgebildet. Insbesondere weist die Fluidflussunterbrechungsvorrichtung 16f eine Ventilöffnung 90f auf. Vorzugsweise weist die Fluidflussunterbrechungsvorrichtung 16f einen Einlassbereich 58f und einen Auslassbereich 60f auf. Der Einlassbereich 58f und der Auslassbereich 60f sind insbesondere analog zueinander ausgebildet.

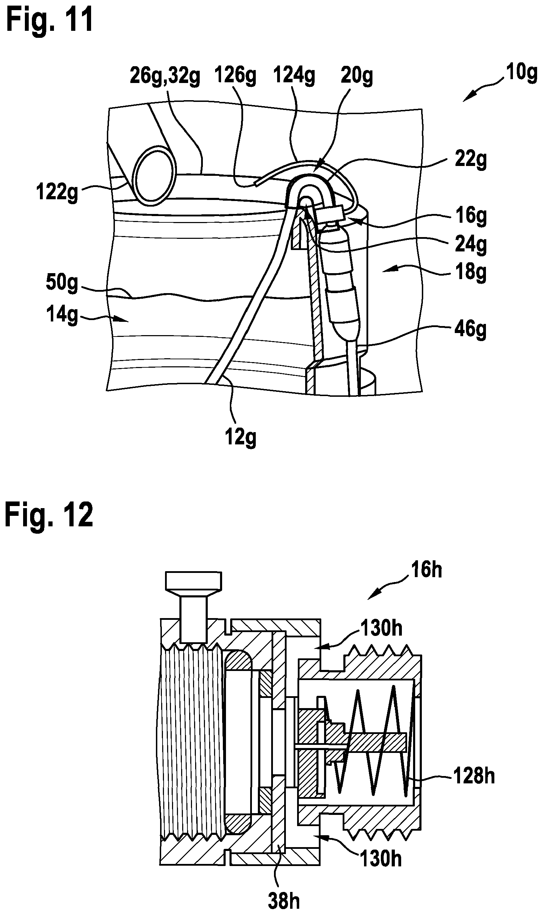

Figur 11 zeigt eine Teilschnittansicht eines Teils eines sechsten alternativen Bewässerungssystems 10g in einer schematischen perspektivischen Darstellung. Das Bewässerungssystem 10g umfasst insbesondere ein Leitungselement 12g, ein weiteres Leitungselement 46g, eine Fluidflussunterbrechungsvorrichtung 16g und eine Befestigungsvorrichtung 20g. Das Leitungselement 12g und die Fluidflussunterbrechungsvorrichtung 16g sind insbesondere mittels der Befestigungsvorrichtung 20g an einem Rand 32g, insbesondere an einer Oberkante 26g, eines Fluidbehältnisses 18g, insbesondere einer Regentonne, befestigt. Das Fluidbehältnis 18g ist vorzugsweise über ein Regenrohr 122g mit einem Fluid 14g, insbesondere mit Regenwasser, befüllbar. Die Fluidflussunterbrechungsvorrichtung 16g ist vorzugsweise als ein Ventil mit einem Belüftungsschlauch 124g ausgebildet. Der Belüftungsschlauch 124g weist bevorzugt einen geringeren Durchmesser auf als das Leitungselement 12g und das weitere Leitungselement 46g. Eine Ausgabeöffnung 126g des Belüftungsschlauchs 124g ist derart, insbesondere in dem Fluidbehältnis 18g, angeordnet, dass ein durch den Belüftungsschlauch 124g transportiertes Fluid 14g in das Fluidbehältnis 18g rückführbar ist. Vorzugsweise ist der Belüftungsschlauch 124g in einem ersten Betriebszustand der Fluidflussunterbrechungsvorrichtung 16g, in dem die Fluidflussunterbrechungsvorrichtung 16g dazu vorgesehen ist, einen Fluidfluss zu erlauben, dazu vorgesehen, einen Teil eines geleiteten Fluids 14g zurück in das Fluidbehältnis 18g zu leiten. Vorzugsweise ist der Belüftungsschlauch 124g in einem zweiten Betriebszustand der Fluidflussunterbrechungsvorrichtung 16g, in dem die Fluidflussunterbrechungsvorrichtung 16g dazu vorgesehen ist, einen Fluidfluss zu unterbrechen, dazu vorgesehen, zu einer Unterbrechung des Fluidflusses, insbesondere eines Siphon-Effekts, Umgebungsluft in das Leitungselement 12g einströmen zu lassen.

Figur 12 zeigt eine Schnittansicht einer siebten alternativen Fluidflussunterbrechungsvorrichtung 16h in einer schematischen perspektivischen Darstellung. Die Fluidflussunterbrechungsvorrichtung 16h ist insbesondere als ein Rückflussverhinderer ausgebildet. Vorzugsweise weist die Fluidflussunterbrechungsvorrichtung 16h zumindest ein Rückstellelement 128h, insbesondere eine Druckfeder, auf, die dazu vorgesehen ist, in einem zweiten Betriebszustand der Fluidflussunterbrechungsvorrichtung 16h, in dem die Fluidflussunterbrechungsvorrichtung 16h dazu vorgesehen ist, einen Fluidfluss zu unterbrechen, ein Wirkelement 38h, insbesondere eine Dichtungsklappe, der Fluidflussunterbrechungsvorrichtung 16h mit einer Rückstellkraft zu beaufschlagen. Insbesondere ist das Wirkelement 38h dazu vorgesehen, unter einer Kraftbeaufschlagung durch das Rückstellelement 128h Belüftungsöffnungen 130h der Fluidflussunterbrechungsvorrichtung 16h freizugeben, durch die Umgebungsluft einströmen kann.

## Patentansprüche

1. Bewässerungssystem, insbesondere Gartenbewässerungssystem, mit zumindest einem Leitungselement (12a; 12e; 12g), insbesondere einem Gartenschlauch und/oder einem Gartenschlauchadapter, das dazu vorgesehen ist, zumindest ein Fluid (14a; 14e; 14g), insbesondere Regenwasser, zu leiten, und mit zumindest einer mit dem Leitungselement (12a; 12e; 12g) fluidtechnisch koppelbaren Fluidflussunterbrechungsvorrichtung (16a-16h), die dazu vorgesehen ist, ein Leerlaufen eines Fluidbehältnisses (18a; 18g), insbesondere durch einen Siphon-Effekt, zu verhindern, **dadurch gekennzeichnet, dass** die, insbesondere als eine zumindest teilautomatische Anti-Siphon-Vorrichtung ausgebildete, Fluidflussunterbrechungsvorrichtung (16a-16h) dazu vorgesehen ist, zumindest teilautomatisch ein Leerlaufen des Fluidbehältnisses (18a; 18g) zu verhindern.

2. Bewässerungssystem nach Anspruch 1, **gekennzeichnet durch** zumindest eine Befestigungsvorrichtung (20a; 20d; 20g), die zu einer Aufnahme des Leitungselements (12a; 12e; 12g) und/oder der Fluidflussunterbrechungsvorrichtung (16a-16h) zumindest ein Führungselement (22a; 22d; 22g) aufweist, und die zumindest einen Befestigungsbereich (24a; 24d; 24g), insbesondere eine Anlagefläche, aufweist, der/die dazu vorgesehen ist, die Fluidflussunterbrechungsvorrichtung (16a-16h), insbesondere werkzeuglos, an dem Fluidbehältnis (18a; 18g), insbesondere an einer Oberkante (26a; 26g) des Fluidbehältnisses (18a; 18g), zu befestigen.

3. Bewässerungssystem nach Anspruch 2, **dadurch gekennzeichnet, dass** die Befestigungsvorrichtung (20a; 20d; 20g) zumindest eine Fixiereinheit (28a; 28d) zu einer, insbesondere werkzeuglosen, Fixierung der Fluidflussunterbrechungsvorrichtung (16a; 16d) aufweist.

4. Bewässerungssystem nach Anspruch 3, **dadurch gekennzeichnet, dass** die Fluidflussunterbrechungsvorrichtung (16a; 16d) zumindest eine mit der Fixiereinheit (28a; 28d) der Befestigungsvorrichtung (20a; 20d) zusammenwirkende Gegenfixiereinheit (30a; 30d) zu einer, insbesondere lösbaren, Kopplung mit der Befestigungsvorrichtung (20a; 20d) aufweist.

5. Bewässerungssystem nach den Ansprüchen 3 und 4, **dadurch gekennzeichnet, dass** die Fixiereinheit (28a; 28d) und/oder die Gegenfixiereinheit (30a; 30d) als Klickverbinder ausgebildet sind/ist.

6. Bewässerungssystem nach einem der Ansprüche 2 bis 5, **dadurch gekennzeichnet, dass** der Befestigungsbereich (24a; 24d; 24g) abgewinkelt, insbesondere U-förmig, ausgebildet ist.

7. Bewässerungssystem nach einem der Ansprüche 2 bis 6, **dadurch gekennzeichnet, dass** die Befestigungsvorrichtung (20a; 20d; 20g) mittels des Befestigungsbereichs (24a; 24d; 24g) an einem Rand (32a; 32g), insbesondere an einer Oberkante (26a; 26g), des Fluidbehältnisses (18a; 18g) einhakbar ist.

8. Bewässerungssystem nach einem der Ansprüche 2 bis 7, **dadurch gekennzeichnet, dass** das Führungselement (22a; 22d; 22g) gebogen, insbesondere U-förmig, ausgebildet ist und dazu vorgesehen ist, das Leitungselement (12a; 12d; 12g), insbesondere in einem an einem Rand (32a; 32g) des Fluidbehältnisses (18a; 18g) befestigten Zustand, zumindest im Wesentlichen knickfrei aufzunehmen.

9. Bewässerungssystem nach einem der vorhergehenden Ansprüche, **dadurch gekennzeichnet, dass** die Fluidflussunterbrechungsvorrichtung (16a-16h) als ein Sicherheitsventil, insbesondere als ein Kugelventil, ausgebildet ist.

10. Bewässerungssystem nach einem der vorhergehenden Ansprüche, **dadurch gekennzeichnet, dass** die Fluidflussunterbrechungsvorrichtung (16a) zumindest eine Überdruckentlastungseinheit (34a) aufweist, die dazu vorgesehen ist, in Abhängigkeit von einem überstiegenen Grenzdruck in der Fluidflussunterbrechungsvorrichtung (16a) ein Fluid (14a) austreten zu lassen.

11. Bewässerungssystem nach einem der vorhergehenden Ansprüche, **dadurch gekennzeichnet, dass** die Fluidflussunterbrechungsvorrichtung (16b; 16c) zumindest eine Abschirmeinheit (36b; 36c) umfasst, die dazu vorgesehen ist, zumindest ein Wirkelement (38b; 38c), insbesondere eine Kugel, der Fluidflussunterbrechungsvorrichtung (16b; 16c) einzukapseln, insbesondere in einer Überdrucksituation.

12. Bewässerungssystem nach einem der vorhergehenden Ansprüche, **gekennzeichnet durch** zumindest eine Pumpeinheit (40a), die dazu vorgesehen ist, ein Fluid (14a) durch das Leitungselement (12a) zu befördern, und durch zumindest eine Energieversorgungseinheit (42a), insbesondere einen Akkumulator, die/der zu einer netzunabhängigen Energieversorgung zumindest der Pumpeinheit (40a) vorgesehen ist.

13. Bewässerungssystem nach Anspruch 12, **gekennzeichnet durch** zumindest eine Nutzerinteraktionseinheit (44a), die dazu eingerichtet ist, einem Nutzer Steuerungsfunktionen für die Pumpeinheit (40a), insbesondere zumindest eine Zeitschaltfunktion, bereitzustellen.

14. Befestigungsvorrichtung für ein Bewässerungssystem nach einem der vorhergehenden Ansprüche.

15. Fluidflussunterbrechungsvorrichtung für ein Bewässerungssystem nach einem der Ansprüche 1 bis 13.

16. Fluidflussunterbrechungsvorrichtung nach Anspruch 15, **gekennzeichnet durch** zumindest eine Überdruckentlastungseinheit (34a), die dazu vorgesehen ist, in Abhängigkeit von einem überstiegenen Grenzdruck ein Fluid (14a) austreten zu lassen.
